# EUROPEAN PATENT APPLICATION

(11) **EP 2 793 465 A1**
(43) Date of publication of application: **22.10.2014**
(21) Application number: 12856645.2
(22) Date of filing: 15.10.2012
(51) Int. Cl.: H04N 7/32, H04N 13/00

(54) **IMAGE PROCESSING DEVICE AND IMAGE PROCESSING METHOD**

(30) Priority: 15.12.2011 JP 2011274660
(71) Applicant: Sony Corporation, Tokyo 108-0075 (JP)
(72) Inventor: SATO, Kazushi, Tokyo 108-0075 (JP)
(74) Representative: Malden, Nicholas
(86) International application number: PCT/JP2012/076618
(87) International publication number: WO 2013/088833

(57) **Abstract**

Provided is an image processing device including a decoding section that, from an encoded stream of a first picture among two or more pictures associated with a common scene, decodes MostProbableMode information for a first prediction unit within the first picture, a first prediction section that conducts intra prediction on the first prediction unit using the MostProbableMode information decoded by the decoding section, and a second prediction section that conducts intra prediction using the MostProbableMode information used by the first prediction section on a second prediction unit corresponding to the first prediction unit within a second picture among the two or more pictures.

## Description

### Technical Field

The present disclosure relates to an image processing device and an image processing method.

### Background Art

Among technologies that are important for an image encoding scheme for compressing the data size of a digital image is in-plane prediction, that is, intra prediction. Intra prediction is a technology of reducing the amount of information encoded by utilizing the correlation between adjacent blocks in an image and predicting a pixel value in a given block from pixel values of other adjacent blocks. In an image encoding scheme prior to MPEG4, only DC components and low-frequency components of an orthogonal transform coefficient are subjected to intra prediction. Meanwhile, in H.264/AVC (Advanced Video Coding), all components can be subjected to intra prediction. When intra prediction is used, a significant improvement in the compression ratio can be expected for an image having a gentle change in pixel values, like an image of a blue sky, for example.

During intra prediction, ordinarily an optimal prediction mode for predicting pixel values in a block to be predicted is selected from multiple prediction modes. Typically, prediction modes may be distinguished by the prediction direction from the reference pixel to the pixel to be predicted. In HEVC, whose standardization is being advanced as a next-generation image coding scheme to succeed H.264/AVC, it is anticipated that an angular intra prediction method like that described in Non-Patent Literature 1 below will be adopted. According to an angular intra prediction method, prediction modes corresponding to 33 prediction directions are selectable for a luma prediction unit (PU) with an 8x8 pixel, 16x16 pixel, or 32x32 pixel size, for example.

MostProbableMode is a mechanism introduced in order to reduce the bit rate of prediction mode information in intra prediction. In H.264/AVC, the prediction mode with the smaller mode number from among the left and up neighboring blocks is treated as the MostProbableMode of the block (prediction unit) to be predicted. In contrast, in HEVC, there is proposed the use of index information for each prediction unit to indicate the position of the neighboring block having the prediction mode to be treated as the MostProbableMode from among the left and up neighboring blocks (see Non-Patent Literature 2 below). Consequently, it is anticipated that a larger proportion of prediction units will be able to utilize the MostProbableMode, improving coding efficiency.

On the other hand, another important technology for future image coding schemes is scalable coding (also called scalable video coding (SVC)). Scalable coding refers to technology that hierarchically codes layers that transmit a rough image signal and layers that transmit a fine image signal. Typical attributes that are hierarchically layered in scalable coding are primarily the following three types:
- Spatial scalability: the spatial resolution or the image size is hierarchically layered.
- Temporal scalability: the frame rate is hierarchically layered.
- Signal-to-noise ratio (SNR) scalability: the signal-to-noise ratio (S/N ratio) is hierarchically layered.
Furthermore, although not yet adopted in a standard specification, bit depth scalability and chroma format scalability are also being discussed.

Multiple layers encoded in scalable coding generally depict a common scene. This point of multiple streams being encoded for a common scene not only applies to scalable coding, but is also similar for multiview coding for stereoscopic images, and interlaced coding.

### Citation List

### Non-Patent Literature

Non-Patent Literature 1: Kemal Ugur, et al., "Description of video coding technology proposal by Tandberg, Nokia, Ericsson", JCTVC-A119, April 2010.
Non-Patent Literature 2: Mei Guo, Xun Guo, Shawmin Lei, "Improved Intra Mode Coding", JCTVC-D166, January 2011.

### Summary of Invention

### Technical Problem

However, separately encoding parameters for each layer in scalable coding is not optimal from the perspective of coding efficiency. If parameters of lower layers could be reused in upper layers, it would be possible to decrease the bit rate for upper layers, and raise the coding efficiency. Multiview coding and interlaced coding are also similar.

Consequently, it is desirable to provide a mechanism enabling parameters for intra prediction to be more efficiently encoded in an image coding scheme in which multiple streams are encoded.

### Solution to Problem

According to the present disclosure, there is provided an image processing device including a decoding section that, from an encoded stream of a first picture among two or more pictures associated with a common scene, decodes MostProbableMode information for a first prediction unit within the first picture, a first prediction section that conducts intra prediction on the first prediction unit using the MostProbableMode information decoded by the decoding section, and a second prediction section that conducts intra prediction using the MostProbableMode information used by the first prediction section on a second prediction unit corresponding to the first prediction unit within a second picture among the two or more pictures.

The image processing device can be realized typically as an image decoding device for decoding an image.

According to the present disclosure, there is provided an image processing method including decoding, from an encoded stream of a first picture among two or more pictures associated with a common scene, MostProbableMode information for a first prediction unit within the first picture, conducting intra prediction on the first prediction unit using the decoded MostProbableMode information, and conducting intra prediction using the MostProbableMode information on a second prediction unit corresponding to the first prediction unit within a second picture among the two or more pictures.

According to the present disclosure, there is provided an image processing device including a first determination section that determines whether a MostProbableMode is enabled for a first prediction unit within a first picture among two or more pictures associated with a common scene, a first encoding section that, according to a determination result by the first determination section, encodes MostProbableMode information for the first prediction unit into an encoded stream of the first picture, and a second determination section that determines whether a reference prediction mode specified using the MostProbableMode information is enabled as a MostProbableMode for a second prediction unit corresponding to the first prediction unit within a second picture among the two or more pictures.

The image processing device can be realized typically as an image encoding device for encoding an image.

According to the present disclosure, there is provided an image processing method including determining whether a MostProbableMode is enabled for a first prediction unit within a first picture among two or more pictures associated with a common scene, encoding, according to a result of the determination, MostProbableMode information for the first prediction unit into an encoded stream of the first picture, and determining whether a reference prediction mode specified using the MostProbableMode information is enabled as a MostProbableMode for a second prediction unit corresponding to the first prediction unit within a second picture among the two or more pictures.

### Advantageous Effects of Invention

According to technology in accordance with the present disclosure, parameters for intra prediction may be more efficiently encoded in an image coding scheme in which multiple streams are encoded.

### Brief Description of Drawings

[FIG. 1] FIG. 1 is an explanatory diagram for describing scalable coding.
[FIG. 2] FIG. 2 is a block diagram illustrating a schematic configuration of an image encoding device according to an embodiment.
[FIG. 3] FIG. 3 is a block diagram illustrating a schematic configuration of an image decoding device according to an embodiment.
[FIG. 4A] FIG. 4A is a block diagram illustrating an example of the configuration of the first picture encoding section illustrated in FIG. 2.
[FIG. 4B] FIG. 4B is a block diagram illustrating an example of the configuration of the second picture encoding section illustrated in FIG. 2.
[FIG. 5] FIG. 5 is a block diagram illustrating an example of a detailed configuration of the intra prediction section illustrated in FIGS. 4A and 4B.
[FIG. 6] FIG. 6 is an explanatory diagram for describing prediction direction candidates that are selectable in the angular intra prediction method of HEVC.
[FIG. 7] FIG. 7 is an explanatory diagram for describing the calculation of reference pixel values in the angular intra prediction method of HEVC.
[FIG. 8] FIG. 8 is an explanatory diagram for describing a first example of MostProbableMode information that may be encoded in an embodiment.
[FIG. 9] FIG. 9 is an explanatory diagram for describing a second example of MostProbableMode information that may be encoded in an embodiment.
[FIG. 10] FIG. 10 is an explanatory diagram for describing a third example of MostProbableMode information that may be encoded in an embodiment.
[FIG. 11] FIG. 11 is a flowchart illustrating a first example of the flow of an intra prediction process during encoding according to an embodiment.
[FIG. 12] FIG. 12 is a flowchart illustrating a second example of the flow of an intra prediction process during encoding according to an embodiment.
[FIG. 13A] FIG. 13A is a block diagram illustrating an example of the configuration of the first picture decoding section illustrated in FIG. 3.
[FIG. 13B] FIG. 13B is a block diagram illustrating an example of configuration of the second picture decoding section illustrated in FIG. 3.
[FIG. 14] FIG. 14 is a block diagram illustrating an example of a detailed configuration of the intra prediction section illustrated in FIGS. 13A and 13B.
[FIG. 15] FIG. 15 is a flowchart illustrating a first example of the flow of an intra prediction process during decoding according to an embodiment.
[FIG. 16] FIG. 16 is a flowchart illustrating a second example of the flow of an intra prediction process during decoding according to an embodiment.
[FIG. 17] FIG. 17 is an explanatory diagram for describing an application of an image encoding process according to an embodiment to multiview coding.
[FIG. 18] FIG. 18 is an explanatory diagram for describing an application of an image decoding process according to an embodiment to multiview coding.
[FIG. 19] FIG. 19 is a block diagram illustrating an example of a schematic configuration of a television.
[FIG. 20] FIG. 20 is a block diagram illustrating an example of a schematic configuration of a mobile phone.
[FIG. 21] FIG. 21 is a block diagram illustrating an example of a schematic configuration of a recording and playback device.
[FIG. 22] FIG. 22 is a block diagram showing an exemplary schematic configuration of an imaging device.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

Also, the description will proceed in the following order.
1. Overview
2. Exemplary configuration of encoding section according to embodiment
3. Process flow during encoding according to embodiment
4. Exemplary configuration of decoding section according to embodiment
5. Process flow during decoding according to embodiment
6. Application to various image coding schemes
7. Exemplary applications
8. Conclusion

### <1. Overview>

In this section, an overview of an image encoding device and an image decoding device according to an embodiment will be described by taking application to scalable coding as an example. However, the configuration of these devices described in this specification are also equally applicable to multiview coding and interlaced coding.

With scalable coding, multiple layers that respectively include a series of images are encoded. The base layer is encoded first, and is the layer that expresses the roughest image. The encoded stream of the base layer may be decoded independently, without decoding the encoded streams of other layers. A layer other than the base layer is called an enhancement layer, and is a layer that expresses a finer image. The encoded stream of an enhancement layer is encoded using information included in the encoded stream of the base layer. Consequently, reproducing the image of an enhancement layer involves decoding the encoded streams of both the base layer and the enhancement layer. The number of layers handled in scalable coding may be any number equal to or greater than 2. In the case of encoding three or more layers, the lowermost layer is the base layer, and the multiple remaining layers are enhancement layers. The encoded stream of a higher enhancement layer may be encoded and decoded using information included in the encoded stream of a lower enhancement layer or the base layer. In this specification, among at least two layers having a dependency relationship, a layer that is depended on is called a lower layer, while a depending layer is called an upper layer.

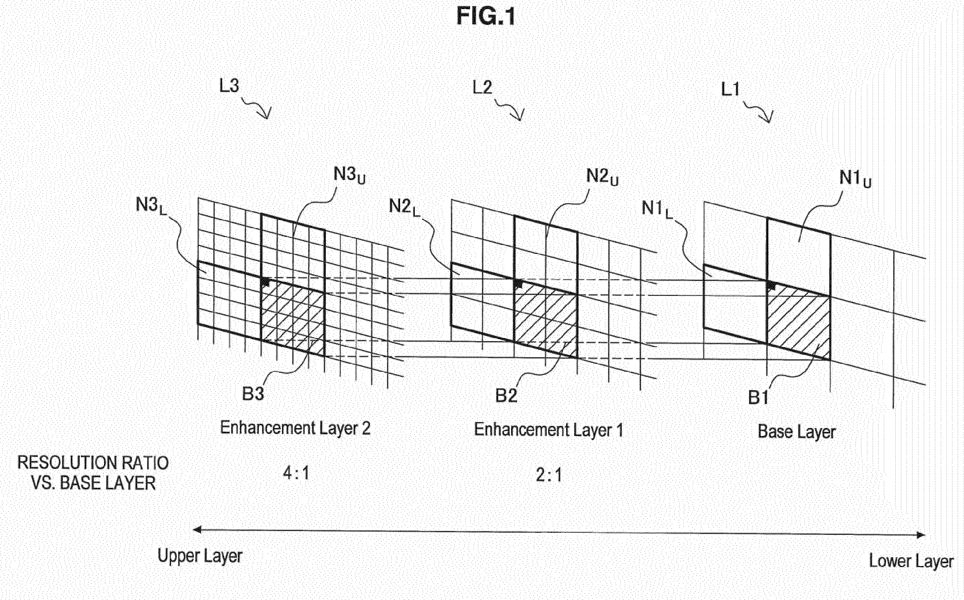

FIG. 1 illustrates three layers L1, L2, and L3 that are scalably encoded. The layer L1 is the base layer, while the layers L2 and L3 are enhancement layers. Note that herein, spatial scalability is taken as an example from among the various types of scalability. The ratio of spatial resolution of the layer L2 versus the layer L1 is 2:1. The ratio of spatial resolution of the layer L3 versus the layer L1 is 4:1. The block B1 of the layer L1 is a prediction unit within a picture in the base layer. The blocks N1_{U} and N1_{L} of the layer L1 are the up and left neighboring blocks of the block B1, respectively. The block B2 of the layer L2 is a prediction unit within a picture in an enhancement layer depicting a scene shared in common with the block B1. The block B2 corresponds to the block B1 of the layer L1. The blocks N2_{U} and N2_{L} of the layer L2 are the up and left neighboring blocks of the block B2, respectively. The block B3 of the layer L3 is a prediction unit within a picture in an upper enhancement layer depicting a scene shared in common with the blocks B1 and B2. The block B3 corresponds to the block B1 of the layer L1 and the block B2 of the layer L2. The blocks N3_{U} and N3_{L} of the layer L3 are the up and left neighboring blocks of the block B3, respectively.

In such a layer structure, the spatial correlation of images within a picture in a given layer ordinarily resembles the spatial correlation of images within a picture in another layer associated with a common scene. For example, in the case of strong correlation between the block B1 and the neighboring block N1_{L} in the layer L1, it is predicted that the correlation will be strong between the block B2 and the neighboring block N2_{L} in the layer L2, and that the correlation will be strong between the block B3 and the neighboring N3_{L} in the layer L3. Consequently, if MostProbableMode information, which is a parameter determined depending on the spatial correlation of images, is reused, the bit rate could be effectively reduced. This point of the spatial correlation of images being resembling each other among layers is also similar for SNR scalability and bit depth scalability.

Note that a block in another layer that corresponds to a block in a given layer refers to, for example, a block in another layer that includes a pixel corresponding to a pixel at a designated position (for example, the upper-left) within the block in the given layer. With such a definition, it is possible to uniquely determine a block in a lower layer that corresponds to a block in an upper layer, even if there exists a block in an upper layer that integrates multiple blocks in a lower layer, for example.

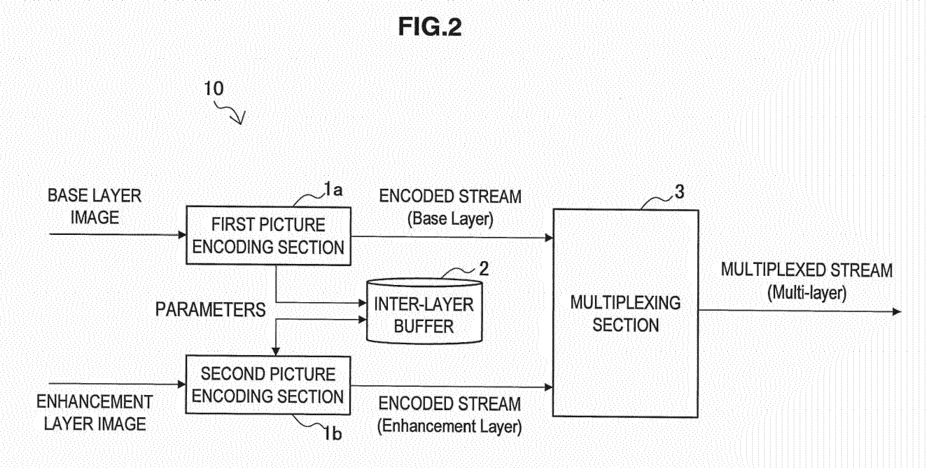

FIG. 2 is a block diagram illustrating a schematic configuration of an image encoding device 10 according to an embodiment that supports scalable coding. Referring to FIG. 2, the image encoding device 10 is equipped with a first picture encoding section 1a, a second picture encoding section 1b, an inter-layer buffer 2, and a multiplexing section 3.

The first picture encoding section 1a encodes base layer images, and generates an encoded stream of the base layer. The second picture encoding section 1b encodes enhancement layer images, and generates encoded streams of the enhancement layers. The inter-layer buffer 2 temporarily stores parameters that are reused between layers. The multiplexing section 3 multiplexes the encoded stream of the base layer generated by the first picture encoding section 1a with the encoded streams of one or more enhancement layers generated by the second picture encoding section 1b, and generates a multilayer multiplexed stream.

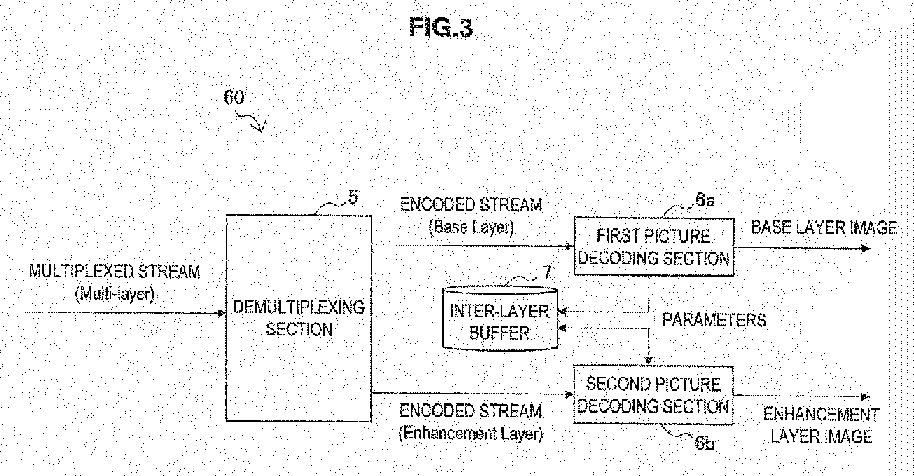

FIG. 3 is a block diagram illustrating a schematic configuration of an image decoding device 60 according to an embodiment that supports scalable coding. Referring to FIG. 3, the image decoding device 60 is equipped with a demultiplexing section 5, a first picture decoding section 6a, a second picture decoding section 6b, and an inter-layer buffer 7.

The demultiplexing section 5 demultiplexes a multilayer multiplexed stream into an encoded stream of a base layer and one or more encoded streams of enhancement layers. The first picture decoding section 6a decodes the encoded stream of the base layer into base layer images. The second picture decoding section 6b decodes the encoded streams of the enhancement layers into enhancement layer images. The inter-layer buffer 7 temporarily stores parameters that are reused between layers.

In the image encoding device 10 exemplified in FIG. 2, the configuration of the first picture encoding section 1a for encoding the base layer and the configuration of the second picture encoding section 1b for encoding enhancement layers resemble each other. One difference between these configurations is that, regarding intra prediction, the second picture encoding section 1b reuses the results of a base layer encoding process by the first picture encoding section 1a to conduct an enhancement layer encoding process. Accordingly, in the next section, after describing the common parts of the configurations of the first picture encoding section 1a and the second picture encoding section 1b, the focus will shift to intra prediction in particular and the relationship between these configurations will be described in detail.

Similarly, in the image decoding device 60 exemplified in FIG. 3, the configuration of the first picture decoding section 6a for decoding the base layer and the configuration of the second picture decoding section 6b for decoding enhancement layers resemble each other. One difference between these configurations is that, regarding intra prediction, the second picture decoding section 6b reuses the results of a base layer decoding process by the first picture decoding section 6a to conduct an enhancement layer decoding process. Accordingly, in a later section, after describing the common parts of the configurations of the first picture decoding section 6a and the second picture decoding section 6b, the focus will shift to intra prediction in particular and the relationship between these configurations will be described in detail.

### <2. Exemplary configuration of encoding section according to embodiment>

### [2-1. Exemplary overall configuration]

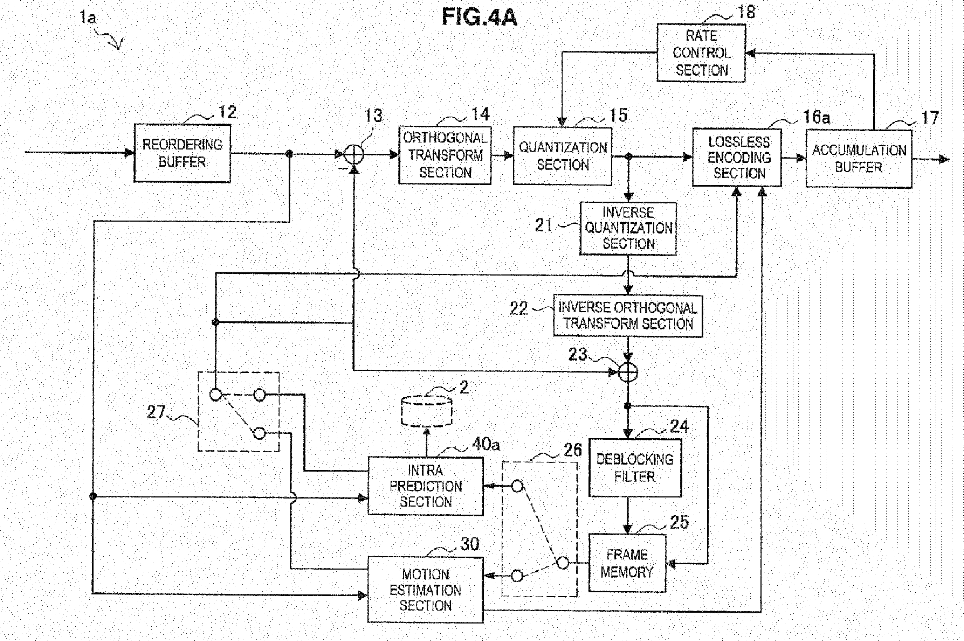

FIG. 4A is a block diagram illustrating an example of the configuration of the first picture encoding section 1a illustrated in FIG. 2. Referring to FIG. 4A, the first picture encoding section 1a is equipped with a reordering buffer 12, a subtraction section 13, an orthogonal transform section 14, a quantization section 15, a lossless encoding section 16a, an accumulation buffer 17, a rate control section 18, an inverse quantization section 21, an inverse orthogonal transform section 22, an addition section 23, a deblocking filter 24, frame memory 25, selectors 26 and 27, a motion estimation section 30, and an intra prediction section 40a.

The reordering buffer 12 reorders the images included in the sequence of image data. After reordering the images according to a group of pictures (GOP) structure in accordance with the encoding process, the reordering buffer 12 outputs the reordered image data to the subtraction section 13, the motion estimation section 30, and the intra prediction section 40a.

The subtraction section 13 is supplied with the image data input from the reordering buffer 12, and predicted image data input from the motion estimation section 30 or the intra prediction section 40 described below. The subtraction section 13 calculates prediction error data that is the difference between the image data input from the reordering buffer 12 and the predicted image data, and outputs the calculated prediction error data to the orthogonal transform section 14.

The orthogonal transform section 14 performs orthogonal transform on the prediction error data input from the subtraction section 13. Orthogonal transform performed by the orthogonal transform section 14 may be, for example, discrete cosine or. The orthogonal transform section 14 outputs transform coefficient data acquired in the orthogonal transform process to the quantization section 15.

The quantization section 15 is supplied with the transform coefficient data input from the orthogonal transform section 14 and a rate control signal from the rate control section 18 described below. The quantization section 15 performs quantization on the transform coefficient data, and outputs the transform efficient data after the quantization (hereinafter referred to as quantized data) to the lossless encoding section 16a and the inverse quantization section 21. In addition, the quantization section 15 changes the bit rate of the quantized data to be input to the lossless encoding section 16 by switching a quantization parameter (a quantization scale) on the basis of the rate control signal from the rate control section 18.

The lossless encoding section 16a performs a lossless encoding process on the base layer quantized data input from the quantization section 15 to generate an base layer encoded stream. The lossless encoding performed by the lossless encoding section 16 may be, for example, variable-length coding, arithmetic coding, or the like. In addition, the lossless encoding section 16a multiplexes information about intra prediction or information about inter prediction input from the selector 27 within a header region of the encoded stream. Then, the lossless encoding section 16a outputs the generated encoded stream to the storage buffer 17.

Information related to intra prediction that is encoded by the lossless encoding section 16a may include base layer prediction mode information and MostProbableMode information, for example. This information will be further described later.

In the storage buffer 17, the encoded stream input from the lossless encoding section 16a is temporarily stored using a storage medium such as semiconductor memory. Then, the storage buffer 17 outputs the stored encoded stream to a transmission section (not shown; for example, a communication interface or an interface for connection to a peripheral device) at a rate corresponding to the bandwidth of the transmission channel.

The rate control section 18 monitors the available capacity of the storage buffer 17. Then, the rate control section 18 generates a rate control signal according to the available capacity of the storage buffer 17, and outputs the generated rate control signal to the quantization section 15. For example, the rate control section 18, when the available capacity of the storage buffer 17 is small, generates a rate control signal for lowering the bit rate of the quantized data. Meanwhile, for example, the rate control section 18, when the available capacity of the storage buffer 17 is sufficiently large, generates a rate control signal for increasing the bit rate of the quantized data.

The inverse quantization section 21 performs an inverse quantization process on the quantized data input from the quantization section 15. Then, the inverse quantization section 21 outputs transform coefficient data acquired by the inverse quantization process to the inverse orthogonal transform section 22.

The inverse orthogonal transform section 22 performs an inverse orthogonal transform process on the transform coefficient data input from the inverse quantization section 21 to restore the prediction error data. Then, the inverse orthogonal transform section 22 outputs the restored prediction error data to the addition section 23.

The addition section 23 adds together the restored prediction error data input from the inverse orthogonal transform section 22 and the predicted image data input from the motion estimation section 30 or the intra prediction section 40a to generate the decoded image data. Then, the addition section 23 outputs the regenerated decoded image data to the deblocking filter 24 and the frame memory 25.

The deblocking filter 24 performs a filtering process for reducing blocking artifacts that occurs during encoding of an image. The deblocking filter 24 removes blocking artifacts by filtering the decoded image data input from the addition section 23, and outputs the decoded image data after the filtering to the frame memory 25.

The frame memory 25 uses a storage medium to store decoded image data input from the addition section 23, and post-filtering decoded image data input from the deblocking filter 24.

The selector 26 retrieves post-filtering decoded image data to be used for inter prediction from the frame memory 25, and supplies the retrieved decoded image data to the motion estimation section 30 as reference image data. In addition, the selector 26 retrieves pre-filtering decoded image data to be used for intra prediction from the frame memory 25, and supplies the retrieved decoded image data to the intra prediction section 40a as reference image data.

The selector 27, in the inter prediction mode, outputs predicted image data output from the motion estimation section 30 as a result of inter prediction to the subtraction section 13, and outputs information about the inter prediction to the lossless encoding section 16a. In addition, the selector 27, in the intra prediction mode, outputs predicted image data output from the intra prediction section 40a as a result of intra prediction to the subtraction section 13 and outputs information about the intra prediction to the lossless encoding section 16a. The selector 27 switches between the inter prediction mode and the intra prediction mode according to the magnitudes of cost function values output from the motion estimation section 30 and the intra prediction section 40a

The motion estimation section 30, on the basis of image data (original image data) to be encoded input from the reordering buffer 12 and decoded image data supplied through the selector 26, performs an inter prediction process (an inter-frame prediction process). For example, the motion estimation section 30 evaluates the prediction result in each prediction mode using a predetermined cost function. Next, the motion estimation section 30 selects as an optimal prediction mode a prediction mode in which the cost function value is the minimum, that is, a prediction mode in which the compression ratio is the highest. In addition, the motion estimation section 30 generates a prediction image data according to the optimal prediction mode. Then, the motion estimation section 30 outputs prediction mode information, which represents the selected optimal prediction mode, information about inter prediction including motion vector information and reference image information, the cost function value, and the predicted image data to the selector 27.

The intra prediction section 40a conducts an intra prediction process for each prediction unit within a base layer image, on the basis of original image data that is input from the reordering buffer 12, and decoded image data supplied from the frame memory 25 as reference image data. The intra prediction section 40a then outputs information related to intra prediction as well as a cost function value and predicted image data, to the selector 27.

The first picture encoding section 1a executes the series of encoding processes described herein on a series of image data in the base layer. The intra prediction section 40a uses the inter-layer buffer 2 to buffer MostProbableMode information determined for each prediction unit. Buffered MostProbableMode information is used by the second picture encoding section 1b described next.

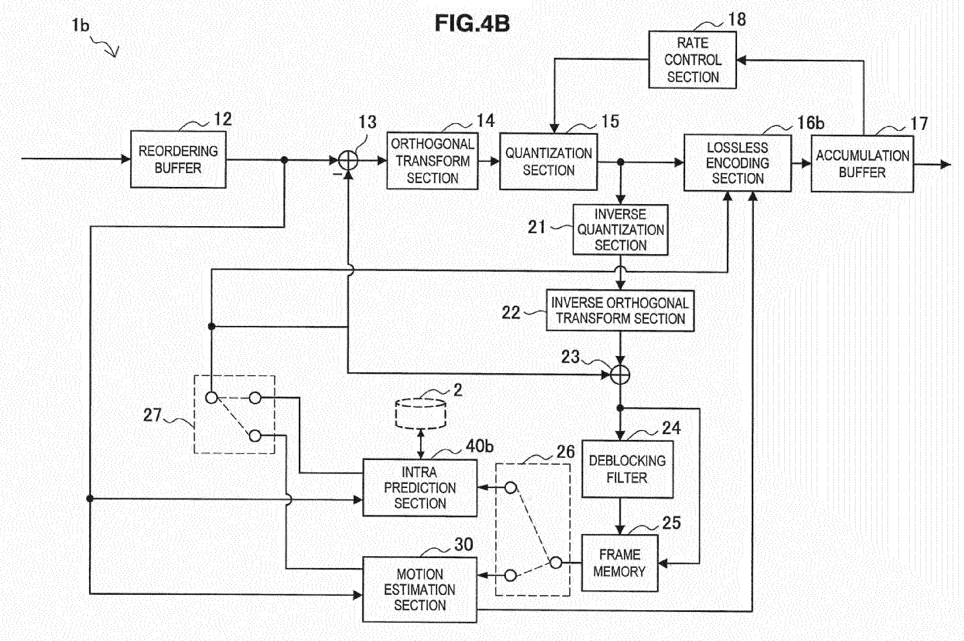

FIG. 4B is a block diagram illustrating an example of the configuration of the second picture encoding section 1b illustrated in FIG. 2. Referring to FIG. 4B, the second picture encoding section 1b is equipped with a reordering buffer 12, a subtraction section 13, an orthogonal transform section 14, a quantization section 15, a lossless encoding section 16b, an accumulation buffer 17, a rate control section 18, an inverse quantization section 21, an inverse orthogonal transform section 22, an addition section 23, a deblocking filter 24, frame memory 25, selectors 26 and 27, a motion estimation section 30, and an intra prediction section 40b.

The lossless encoding section 16b generates an encoded stream of an enhancement layer by performing a lossless encoding process on the quantized data of an enhancement layer input from the quantization section 15. The lossless encoding by the lossless encoding section 16b may be variable-length coding or arithmetic coding, for example. Furthermore, the lossless encoding section 16b multiplexes information related to intra prediction or information related to inter prediction input from the selector 27 into a header area of the encoded stream. The lossless encoding section 16b then outputs the generated encoded stream to the accumulation buffer 17.

Information related to intra prediction that is encoded by the lossless encoding section 16b may include enhancement layer prediction mode information and MostProbableMode information, for example. However, for a prediction unit in which the MostProbableMode information of a lower layer is reused, the lossless encoding section 16b may omit (at least partially) the encoding of the MostProbableMode information of the upper layer. The omission of the encoding of MostProbableMode information will be further described later.

The intra prediction section 40b uses original image data input from the reordering buffer 12, reference image data supplied from the frame memory 25, and MostProbableMode information of a lower layer being stored by the inter-layer buffer 2 to conduct an intra prediction process on each prediction unit set within an image in an enhancement layer. The intra prediction section 40a then outputs information related to intra prediction, a cost function value, and predicted image data to the selector 27.

When multiple enhancement layers exist, the second picture encoding section 1b executes such a series of encoding processes for each enhancement layer. The intra prediction section 40b may also use the inter-layer buffer 2 to buffer MostProbableMode information determined for each prediction unit for processing in even higher upper layers.

### [2-2. Exemplary configuration of intra prediction section]

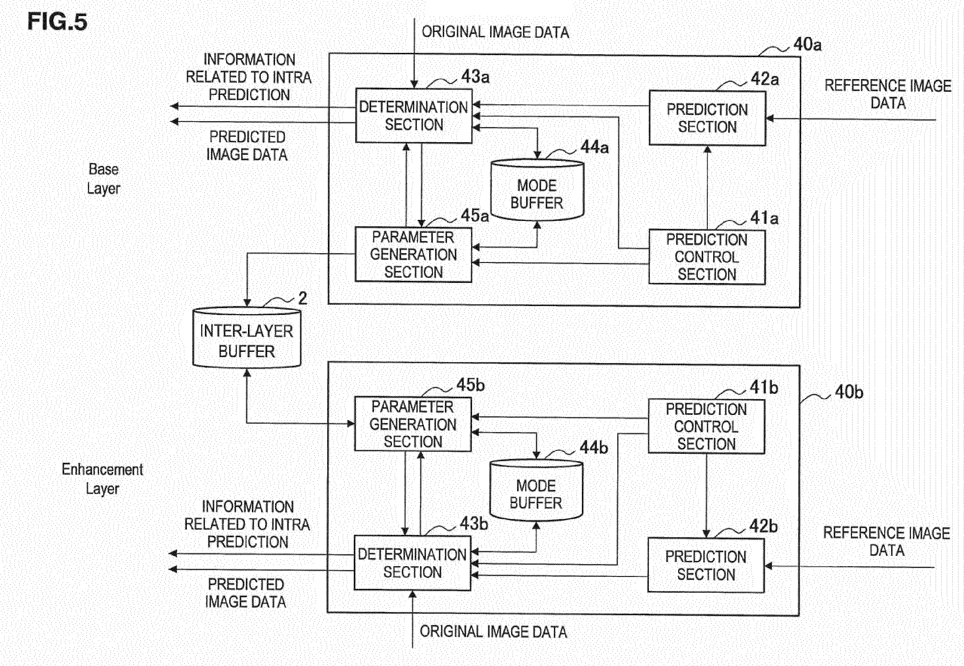

FIG. 5 is a block diagram illustrating an example of a detailed configuration of the intra prediction section 40a illustrated in FIG. 4A and the intra prediction section 40b illustrated in FIG. 4B. Referring to FIG. 5, the intra prediction section 40a includes a prediction control section 41a, a prediction section 42a, a determination section 43a, a mode buffer 44a, and a parameter generation section 45a. The intra prediction section 40b includes a prediction control section 41b, a prediction section 42b, a determination section 43b, a mode buffer 44b, and a parameter generation section 45b.

The prediction control section 41a controls a base layer intra prediction process by the intra prediction section 40a. More specifically, the prediction control section 41a successively sets each of multiple prediction mode candidates in a prediction unit. The prediction section 42a generates a predicted image for each prediction unit by using reference image data input from the frame memory 25, in accordance with a prediction mode candidate set by the prediction control section 41a. The determination section 43a computes cost function value for each prediction mode candidate on the basis of original image data input from the reordering buffer 12 and predicted image data input from the prediction section 42a. The determination section 43a then determines an optimal prediction mode on the basis of the computed cost function values. The mode buffer 44a temporarily stores prediction mode information expressing an optimal prediction mode. In addition, the determination section 43a references the prediction mode information of neighboring blocks stored by the mode buffer 44a, and determines whether MostProbableMode is enabled for each prediction unit within an image in the base layer. The parameter generation section 45a generates prediction mode information and MostProbableMode information according to a determination result by the determination section 43a. The determination section 43a then outputs information related to intra prediction, including prediction mode information and MostProbableMode information generated by the parameter generation section 45a, as well as a cost function value and predicted image data, to the selector 27. The parameter generation section 45a also outputs the MostProbableMode to the inter-layer buffer 2.

The prediction control section 41b controls an enhancement layer intra prediction process by the intra prediction section 40b. More specifically, the prediction control section 41b successively sets each of multiple prediction mode candidates in a prediction unit. The prediction section 42b generates a predicted image for each prediction unit by using reference image data input from the frame memory 25, in accordance with a prediction mode candidate set by the prediction control section 41b. The determination section 43b computes cost function value for each prediction mode candidate on the basis of original image data input from the reordering buffer 12 and predicted image data input from the prediction section 42b. The determination section 43b then determines an optimal prediction mode on the basis of the computed cost function values. The mode buffer 44b temporarily stores prediction mode information expressing an optimal prediction mode. In addition, the determination section 43b references the prediction mode information of neighboring blocks stored by the mode buffer 44b, and determines whether MostProbableMode is enabled for each prediction unit within an image in an enhancement layer. The parameter generation section 45b generates prediction mode information and MostProbableMode information according to a determination result by the determination section 43b. However, for a prediction unit in which the MostProbableMode information of a lower layer is reused, the parameter generation section 45b may omit the generation of the MostProbableMode information of the upper layer. The determination section 43b then outputs information related to intra prediction, including prediction mode information and MostProbableMode information generated by the parameter generation section 45b, as well as a cost function value and predicted image data, to the selector 27. The parameter generation section 45b may also output the MostProbableMode information to the inter-layer buffer 2 in the case in which an even higher upper layer exists.

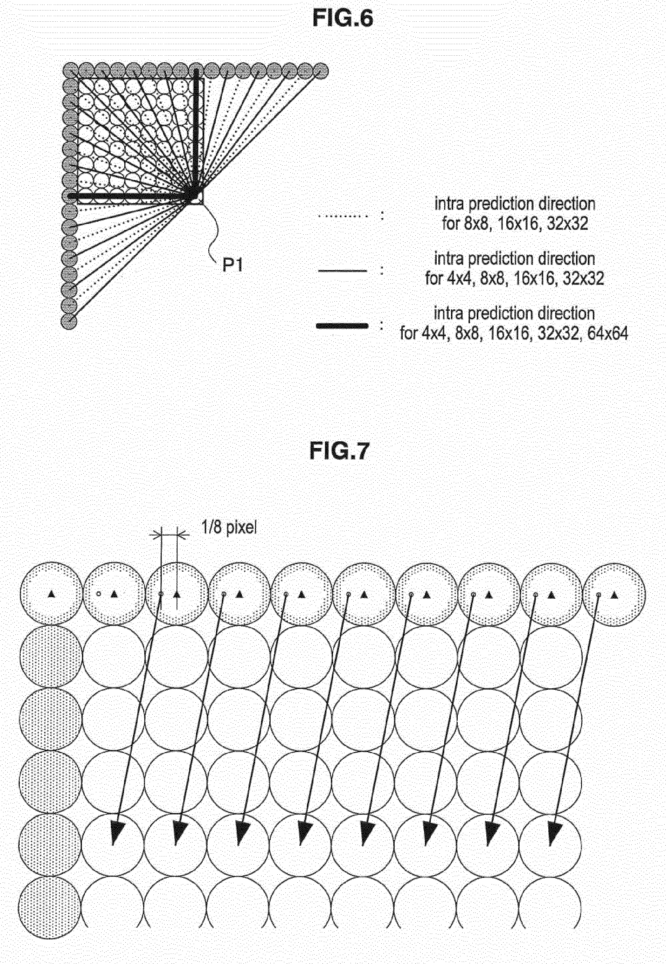

FIG. 6 is an explanatory diagram for describing prediction direction candidates that are selectable in the case in which an angular intra prediction method is used in the intra prediction section 40a and the intra prediction section 40b. The pixel P1 illustrated in FIG. 6 is the pixel to be predicted. The shaded pixels at the perimeter of the prediction unit to which the pixel P1 belongs are reference pixels of neighboring blocks. In the case in which the block size is 4x4 pixels, 17 prediction directions (prediction modes corresponding thereto), which are indicated by the solid lines (both thick lines and thin lines) in the drawing and which join the reference pixels to the pixel to be predicted, are selectable (in addition to DC prediction). In the case in which the block size is 8x8 pixels, 16x16 pixels, or 32x32 pixels, 33 prediction directions (prediction modes corresponding thereto), which are indicated by the dotted lines and the solid lines (both thick lines and thin lines) in the drawing, are selectable (in addition to DC prediction and planar prediction). In the case in which the block size is 64x64 pixels, two prediction directions (prediction modes corresponding thereto), which are indicated by the thick lines in the drawing, are selectable (in addition to DC prediction).

Note that in the angular intra prediction method discussed above, the prediction direction has a high angular resolution. For example, the angular difference between adjacent prediction directions in the case of 8x8 pixels is 180 degrees / 32 = 5.625 degrees. Consequently, the prediction section 42a first calculates reference pixel values at 1/8 pixel precision as illustrated in FIG. 7, and uses the calculated reference pixel values to calculate predicted pixel values in accordance with each prediction mode candidate.

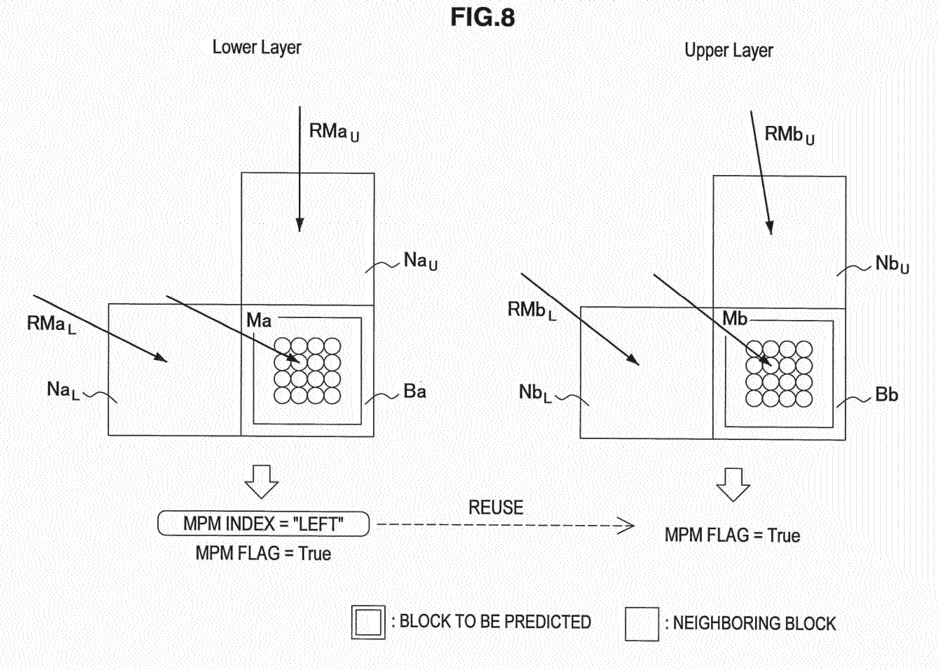

FIGS. 8 to 10 respectively illustrate examples of MostProbableMode information that may be encoded in an embodiment.

### (1) First example

The left side of FIG. 8 illustrates a block Ba to be predicted in a lower layer (the base layer, for example), as well as an up neighboring block Na_{U} and a left neighboring block Na_{L} of the block Ba to be predicted. The optimal prediction mode of the block Ba to be predicted is a prediction mode Ma. The reference prediction mode of the neighboring block Na_{U} is a prediction mode RMa_{U}. The reference prediction mode of the neighboring block Na_{L} is a prediction mode RMa_{L}. In the first example, the prediction directions of the prediction mode Ma and the reference prediction mode RMa_{L} are equal to each other. In this case, the MostProbableMode information of the block Ba to be predicted may indicate MPM Index = "Left" and MPM Flag = "True". The MPM flag is a flag that indicates whether or not MostProbableMode is enabled for the block to be predicted. The MPM index is index information that identifies the position of a neighboring block that includes a valid MostProbableMode as a reference prediction mode when MostProbableMode is enabled. In the first example, the MPM index may be binary information that identifies one of the left and up neighboring block candidates.

The right side of FIG. 8 illustrates a block Bb to be predicted in an upper layer (enhancement layer), as well as an up neighboring block Nb_{U} and a left neighboring block Nb_{L} of the block Bb to be predicted. The block Bb to be predicted is a block in an upper layer that corresponds to the block Ba to be predicted in a lower layer. The optimal prediction mode of the block Bb to be predicted is a prediction mode Mb. The reference prediction mode of the neighboring block Nb_{U} is a prediction mode RMb_{U}. The reference prediction mode of the neighboring block Nb_{L} is a prediction mode RMb_{L}. The prediction directions of the prediction mode Mb and the reference prediction mode RMb_{L} are equal to each other. In this case, the MostProbableMode information may indicate MPM Flag = "True" only. The MPM index is reused from the lower layer and thus is not generated in the upper layer, and not encoded within the encoded stream of the upper layer. In other words, the determination section 43b of the intra prediction section 40b treats the reference prediction mode of the neighboring block at the position indicated by the MPM index (in the example in FIG. 8, left) for the block Ba to be predicted (generated by the parameter generation section 45a of the intra prediction section 40a and encoded by the lossless encoding section 16a, for example) as the MostProbableMode for the block Bb to be predicted.

### (2) Second example

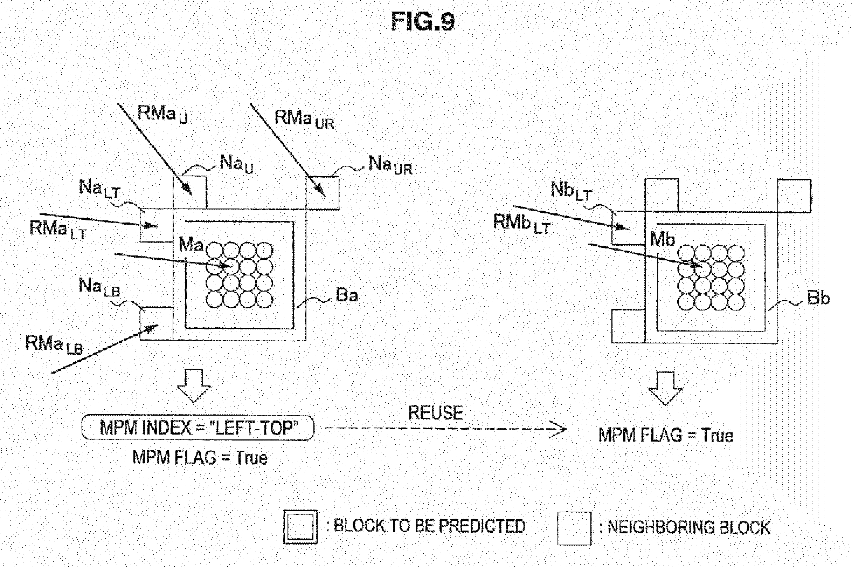

The left side of FIG. 9 illustrates a block Ba to be predicted in a lower layer (the base layer, for example), as well as up, up-right, left-top, and left-bottom neighboring blocks Na_{U}, Na_{UR}, Na_{LT}, and Na_{LB} of the block Ba to be predicted. The optimal prediction mode of the block Ba to be predicted is a prediction mode Ma. The reference prediction mode of the neighboring block Na_{U} is a prediction mode RMa_{U}. The reference prediction mode of the neighboring block Na_{UR} is a prediction mode RMa_{UR}. The reference prediction mode of the neighboring block Na_{LT} is a prediction mode RMa_{LT}. The reference prediction mode of the neighboring block Na_{LB} is a prediction mode RMa_{LB}. In the second example, the prediction directions of the prediction mode Ma and the reference prediction mode RMa_{LT} are equal to each other. In this case, the MostProbableMode information of the block Ba to be predicted may indicate MPM Index = "Left-Top" and MPM Flag = "True". In the second example, the MPM index may be information that identifies one of the four neighboring block candidates.

The right side of FIG. 9 illustrates a block Bb to be predicted in an upper layer (enhancement layer), as well as a left-top neighboring block Nb_{LT} of the block Bb to be predicted. The block Bb to be predicted is a block in an upper layer that corresponds to the block Ba to be predicted in a lower layer. The optimal prediction mode of the block Bb to be predicted is a prediction mode Mb. The reference prediction mode of the neighboring block Nb_{LT} is a prediction mode RMb_{LT}. The prediction directions of the prediction mode Mb and the reference prediction mode RMb_{LT} are equal to each other. In this case, the MostProbableMode information may indicate MPM Flag = "True" only. The MPM index is reused from the lower layer and thus is not generated in the upper layer, and not encoded within the encoded stream of the upper layer. In other words, the determination section 43b of the intra prediction section 40b treats the reference prediction mode of the neighboring block at the position indicated by the MPM index (in the example in FIG. 9, left-top) for the block Ba to be predicted (generated by the parameter generation section 45a of the intra prediction section 40a and encoded by the lossless encoding section 16a, for example) as the MostProbableMode for the block Bb to be predicted.

### (3) Third example

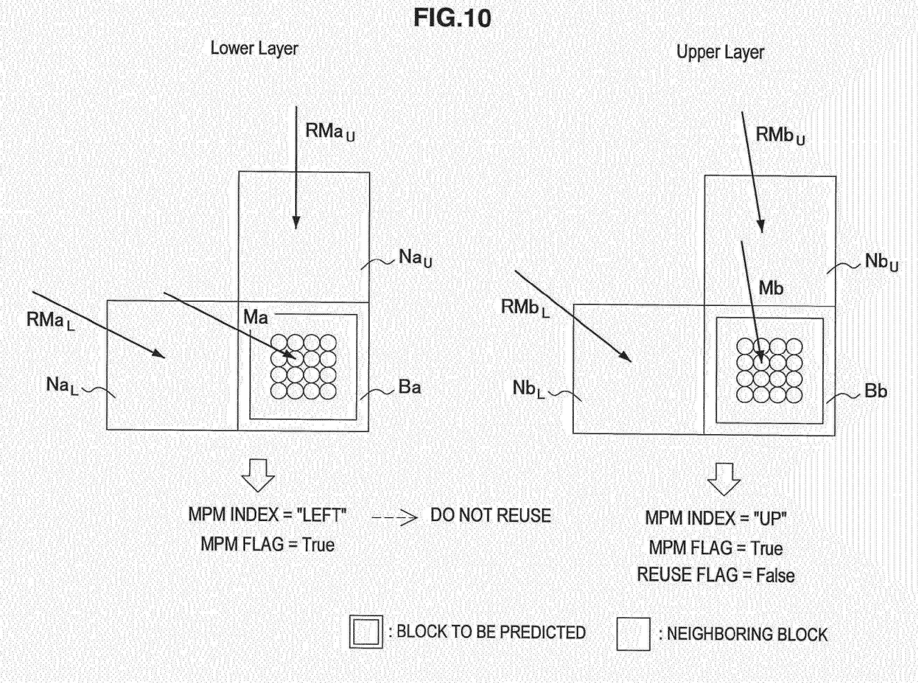

The left side of FIG. 10 illustrates a block Ba to be predicted in a lower layer (the base layer, for example), as well as an up neighboring block Na_{U} and a left neighboring block Na_{L} of the block Ba to be predicted. The optimal prediction mode of the block Ba to be predicted is a prediction mode Ma. The reference prediction mode of the neighboring block Na_{U} is a prediction mode RMa_{U}. The reference prediction mode of the neighboring block Na_{L} is a prediction mode RMa_{L}. In the third example, the prediction directions of the prediction mode Ma and the reference prediction mode RMa_{L} are equal to each other. In this case, the MostProbableMode information of the block Ba to be predicted may indicate MPM Index = "Left" and MPM Flag = "True".

The right side of FIG. 10 illustrates a block Bb to be predicted in an upper layer (enhancement layer), as well as an up neighboring block Nb_{U} and a left neighboring block Nb_{L} of the block Bb to be predicted. The block Bb to be predicted is a block in an upper layer that corresponds to the block Ba to be predicted in a lower layer. The optimal prediction mode of the block Bb to be predicted is a prediction mode Mb. The reference prediction mode of the neighboring block Nb_{U} is a prediction mode RMb_{U}. The reference prediction mode of the neighboring block Nb_{L} is a prediction mode RMb_{L}. In the third example, the prediction direction of the prediction mode Mb is equal to the prediction direction of the reference prediction mode RMb_{U} rather than the reference prediction mode RMb_{L}. In this case, the MostProbableMode information may indicate MPM Index = "Up" rather than just MPM Flag = "True", even in the upper layer. The parameter generation section 45a also generates a Reuse Flag = "False" as an additional parameter.

In other words, in the third example, a reuse flag is introduced as a coding parameter, and this reuse flag indicates whether or not to reuse the MostProbableMode information of a lower layer. Subsequently, in the case in which the reuse flag indicates that the MostProbableMode information of a lower layer is to be reused, an MPM index is not encoded in the upper layer. Conversely, in the case in which the reuse flag does not indicate that the MostProbableMode information of the lower layer is to be reused, an MPM index is also generated in the upper layer, and the generated MPM index is encoded by the lossless encoding section 16b (together with the reuse flag and the MPM flag).

Note that throughout the first to third examples, in the case in which the optimal prediction mode of the block to be predicted differs from the reference prediction modes of all the neighboring blocks, the MPM flag indicates "False", and prediction mode information is generated and encoded for that block to be predicted. Also, in the case in which the reuse flag is not introduced, when the optimal prediction mode of the block to be predicted is not equal to the reference prediction mode of the neighboring block at the position identified by the MostProbableMode information of the lower layer, as in the example in FIG. 10, the MPM flag likewise may indicate "False", and prediction mode information may be encoded for that block to be predicted.

### <3. Process flow during encoding according to embodiment>

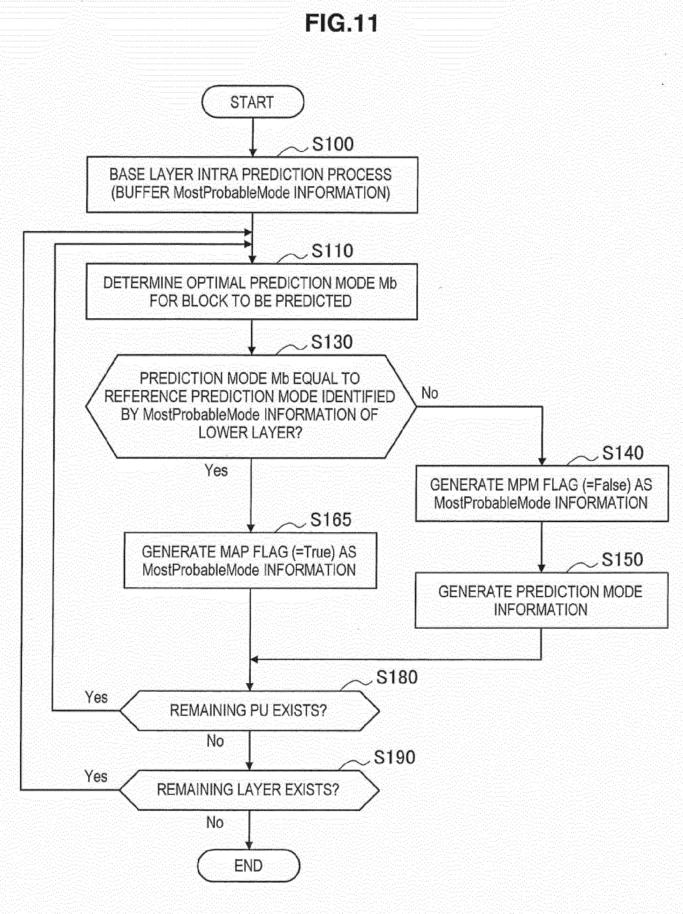

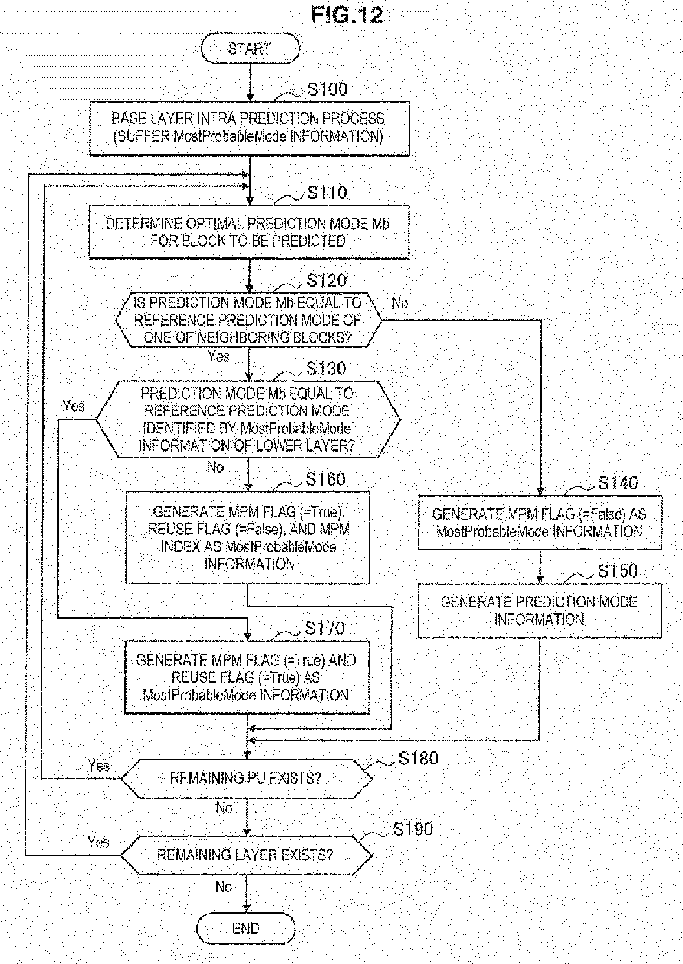

FIGS. 11 and 12 respectively illustrate examples of the flow of an intra prediction process during encoding according to the present embodiment. In the first example illustrated in FIG. 11, a reuse flag as described using FIG. 10 is not introduced. In the second example illustrated in FIG. 12, the reuse flag is introduced.

### (1) First example

Referring to FIG. 11, first, the intra prediction section 40a conducts a base layer intra prediction process (step S100). As a result, the placement of prediction units within a picture in the base layer is decided, and an optimal prediction mode is decided for each prediction unit. Prediction mode information and MostProbableMode information generated in the intra prediction section 40a is encoded within the encoded stream of the base layer by the lossless encoding section 16a. The inter-layer buffer 2 buffers MostProbableMode information generated for each prediction unit.

The process from steps S110 to S180 is an enhancement layer intra prediction process. In this process, the processing from steps S110 to S165 is repeated while treating each prediction unit of each enhancement layer as the block to be predicted. Note that in the following description, the "upper layer" is the layer to be predicted, while the "lower layer" is a layer below the layer to be predicted.

First, when the prediction section 42b generates predicted images of a block to be predicted in accordance with multiple prediction mode candidates, the determination section 43b computes cost function values according to the difference between the original image and the predicted images, and determines an optimal prediction mode Mb on the basis of the computed cost function values (step S110).

Next, the determination section 43b determines whether or not the determined optimal prediction mode Mb is equal to the reference prediction mode of a neighboring block at a position identified by the MPM index included in the MostProbableMode information of the lower layer (step S130). At this point, the process proceeds to step S140 in the case in which the prediction mode Mb differs from the reference prediction mode of the relevant neighboring block. Conversely, the process proceeds to step S165 in the case in which the prediction mode Mb is equal to the reference prediction mode of the relevant neighboring block.

In step S140, the parameter generation section 45b generates MPM Flag = "False" as MostProbableMode information for the block to be predicted (step S140). Next, the parameter generation section 45b generates prediction mode information indicating the optimal prediction mode Mb (step S140).

Meanwhile, in step S165, the parameter generation section 45b generates MPM Flag = "True" as MostProbableMode information for the block to be predicted (step S165). The parameter generation section 45b does not generate an MPM index as MostProbableMode information for the block to be predicted in the upper layer.

After that, in the case in which an unprocessed prediction unit remains within the layer to be predicted, the process returns to step S110 (step S180). Conversely, in the case in which no unprocessed prediction units remain, it is additionally determined whether or not a remaining layer (a higher upper layer) exists (step S190). At this point, in the case in which a remaining layer exists, the process from step S110 onwards is repeated while treating the current layer to be predicted as the lower layer, and the next layer as the upper layer. The MostProbableMode information is buffered by the inter-layer buffer 2. In the case in which no remaining layers exist, the intra prediction process in FIG. 11 ends. Note that the prediction mode information and MostProbableMode information of the upper layer generated at this point is encoded within the encoded stream of the upper layer by the lossless encoding section 16b.

### (2) Second example

Referring to FIG. 12, first, the intra prediction section 40a conducts a base layer intra prediction process (step S100). As a result, the placement of prediction units within a picture in the base layer is decided, and an optimal prediction mode is decided for each prediction unit. Prediction mode information and MostProbableMode information generated in the intra prediction section 40a is encoded within the encoded stream of the base layer by the lossless encoding section 16a. The inter-layer buffer 2 buffers MostProbableMode information generated for each prediction unit.

The process from steps S110 to S180 is an enhancement layer intra prediction process. In this process, the processing from steps S110 to S170 is repeated while treating each prediction unit of each enhancement layer as the block to be predicted.

First, when the prediction section 42b generates predicted images of a block to be predicted in accordance with multiple prediction mode candidates, the determination section 43b computes cost function values according to the difference between the original image and the predicted images, and determines an optimal prediction mode Mb on the basis of the computed cost function values (step S110).

Next, the determination section 43b determines whether or not the determined optimal prediction mode Mb is equal to the reference prediction mode of one of the neighboring blocks (step S120). At this point, the process proceeds to step S140 in the case in which the prediction mode Mb is not equal to the reference prediction mode of any of the neighboring blocks. Conversely, the process proceeds to step S130 in the case in which the prediction mode Mb is equal to the reference prediction mode of one of the neighboring blocks.

In step S130, the determination section 43b determines whether or not the prediction mode Mb is equal to the reference prediction mode of a neighboring block at a position identified by the MPM index included in the MostProbableMode information of the lower layer (step S130). At this point, the process proceeds to step S160 in the case in which the prediction mode Mb differs from the reference prediction mode of the relevant neighboring block. Conversely, the process proceeds to step S170 in the case in which the prediction mode Mb is equal to the reference prediction mode of the relevant neighboring block.

In step S140, the parameter generation section 45b generates MPM Flag = "False" as MostProbableMode information for the block to be predicted (step S140). Next, the parameter generation section 45b generates prediction mode information indicating the optimal prediction mode Mb (step S140).

In step S160, the parameter generation section 45b generates MPM Flag = "True", Reuse Flag = "False", and an MPM index as MostProbableMode information for the block to be predicted (step S160). The MPM index generated at this point indicates the position of a neighboring block having a reference prediction mode equal to the prediction mode Mb.

In step S170, the parameter generation section 45b generates MPM Flag = "True" and Reuse Flag = "True" as MostProbableMode information for the block to be predicted (step S170). In this case, the parameter generation section 45b does not generate an MPM index as MostProbableMode information for the block to be predicted in the upper layer.

After that, in the case in which an unprocessed prediction unit remains within the layer to be predicted, the process returns to step S110 (step S180). Conversely, in the case in which no unprocessed prediction units remain, it is additionally determined whether or not a remaining layer (a higher upper layer) exists (step S190). At this point, in the case in which a remaining layer exists, the process from step S110 onwards is repeated while treating the current layer to be predicted as the lower layer, and the next layer as the upper layer. The MostProbableMode information is buffered by the inter-layer buffer 2. In the case in which no remaining layers exist, the intra prediction process in FIG. 12 ends. Note that the prediction mode information and MostProbableMode information of the upper layer generated at this point is encoded within the encoded stream of the upper layer by the lossless encoding section 16b.

### <4. Exemplary configuration of decoding section according to embodiment >

### [4-1. Exemplary overall configuration]

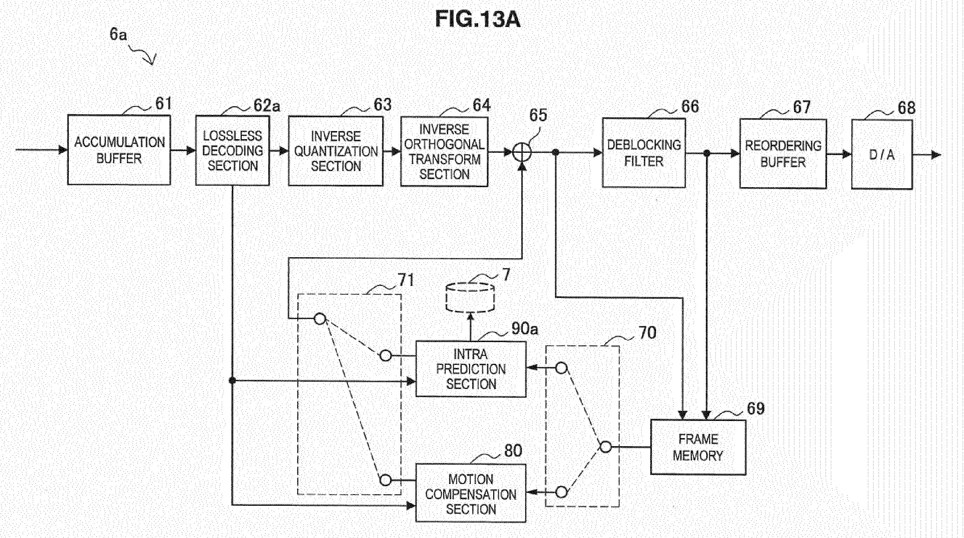

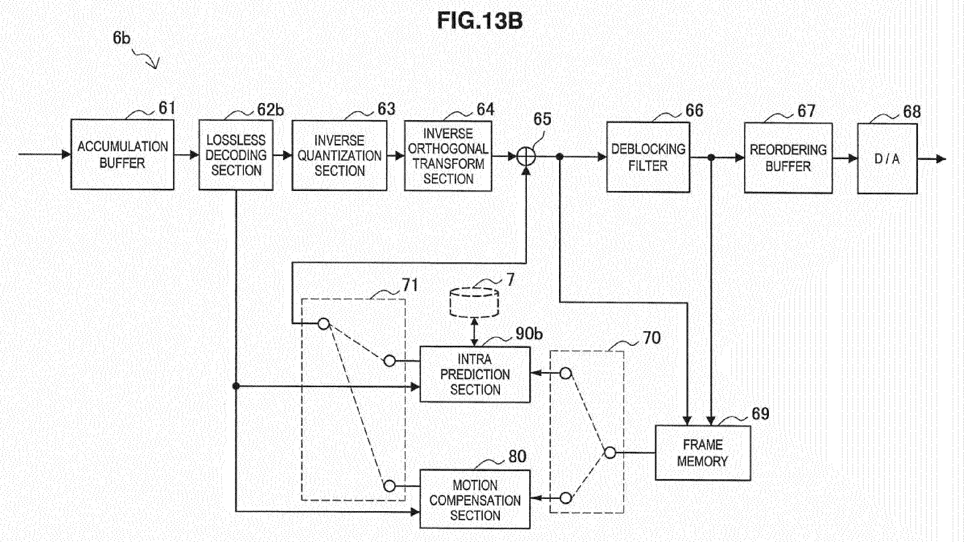

FIG. 13A is a block diagram showing an exemplary configuration of the first picture decoding section 6a shown in FIG. 3. Referring to FIG. 13, the first picture decoding section 6a includes an accumulation buffer 61, a lossless decoding section 62a, an inverse quantization section 63, an inverse orthogonal transform section 64, an addition section 65, a deblocking filter 66, a reordering buffer 67, a D/A (Digital to Analogue) conversion section 68, frame memory 69, selectors 70 and 71, a motion compensation section 80, and an intra prediction section 90a..

The accumulation buffer 61 temporarily stores an encoded stream input via a transmission channel, using a storage medium.

The lossless decoding section 62a decodes an encoded stream of the base layer input from the accumulation buffer 61, according to the coding scheme used at the time of encoding. Also, the lossless decoding section 62a decodes information multiplexed into the header area of the encoded stream. Information decoded by the lossless decoding section 62a may include the information related to inter prediction and the information related to intra prediction discussed above, for example. Information related to intra prediction includes prediction mode information and MostProbableMode information for prediction units within a picture in the base layer. The lossless decoding section 62a outputs information related to inter prediction to the motion compensation section 80. The lossless decoding section 62a also outputs information related to intra prediction to the intra prediction section 90a.

The inverse quantization section 63 performs inverse quantization on the quantized data subjected to decoding by the lossless decoding section 62a. The inverse orthogonal transform section 64 performs, according to the orthogonal transform scheme used in encoding, inverse orthogonal transform on the conversion coefficient data input from the inverse quantization section 63, thereby generating the prediction error data. Then, the inverse orthogonal transform section 64 outputs the generated prediction error data to the addition section 65.

The addition section 65 adds together the prediction error data input from the inverse orthogonal transform section 64 and the predicted image data input from the selector 71, thereby generating the decoded image data. Then, the addition section 65 outputs the generating decoded image data to the deblocking filter 66 and the frame memory 69.

The deblocking filter 66 removes blocking artifacts by filtering the decoded image data input from the addition section 65, and outputs the decoded image data after the filtering to the reordering buffer 67 and the frame memory 69.

The reordering buffer 67 sorts the images input from the deblocking filter 66 to generate a series of image data in time series. Then, the reordering buffer 67 outputs the generated image data to the D/A conversion section 68.

The D/A conversion section 68 converts the image data in digital format input from the reordering buffer 67 into an image signal in analog format. Then, the D/A conversion section 68, for example, outputs an analog image signal to a display (not shown) connected to the image decoding device 60, so that an image is displayed.

The frame memory 69 uses a storage medium to store the unfiltered decoded image data input from the addition section 65 and the filtered decoded image data input from the deblocking filter 66.

The selector 70 switches the output destination of image data from the frame memory 69 between the motion compensation section 80 and the intra prediction section 90a for each block in an image, according to mode information acquired by the lossless decoding section 62a. For example, in the case in which an inter prediction mode is designated, the selector 70 outputs post-filtering decoded image data supplied from the frame memory 69 to the motion compensation section 80 as reference image data. Meanwhile, in the case in which an intra prediction mode is designated, the selector 70 outputs pre-filtering decoded image data supplied from the frame memory 69 to the intra prediction section 90a as reference image data.

The selector 71 switches the output source of the predicted image data to be supplied to the addition section 65 between the motion compensation section 80 and the intra prediction section 90a according to the mode information acquired by the lossless decoding section 62a. For example, the selector 71, when the inter prediction mode is specified, supplies the predicted image data output from the motion compensation section 80 to the addition section 65. In addition, the selector 71, when the intra prediction mode is specified, supplies the predicted image data output from the intra prediction section 90a to the addition section 65.

The motion compensation section 80 performs a motion compensation process on the basis of the information about inter prediction input from the lossless decoding section 62a and the reference image data from the frame memory 69, thereby generating predicted image data. Then, the motion compensation section 80 outputs the generated predicted image data to the selector 71.

The intra prediction section 90a performs a base layer intra prediction process on the basis of the information about intra prediction input from the lossless decoding section 62a and the reference image data from the frame memory 69, thereby generating predicted image data. Then, the intra prediction section 90a outputs the generated predicted image data to the selector 71. Such intra prediction process performed by the intra prediction section 90a is further described below.

The first picture decoding section 6a executes the series of decoding processes described herein on a series of image data in the base layer. The intra prediction section 90a uses the inter-layer buffer 7 to buffer MostProbableMode information decoded for each prediction unit. Buffered MostProbableMode information is used by the second picture decoding section 6b described next.

FIG. 13B is a block diagram illustrating an example of the configuration of the second picture decoding section 6b illustrated in FIG. 3. Referring to FIG. 13B, the second picture decoding section 6b is equipped with an accumulation buffer 61, a lossless decoding section 62b, an inverse quantization section 63, an inverse orthogonal transform section 64, an addition section 65, a deblocking filter 66, a reordering buffer 67, a D/A conversion section 68, frame memory 69, selectors 70 and 71, a motion compensation section 80, and an intra prediction section 90b.

The lossless decoding section 62b decodes an encoded stream of an enhancement layer input from the accumulation buffer 61, according to the coding scheme used at the time of encoding. Also, the lossless decoding section 62b decodes information multiplexed into the header area of the encoded stream. Information decoded by the lossless decoding section 62b may include the information related to inter prediction and the information related to intra prediction discussed above, for example. Information related to intra prediction may include prediction mode information and MostProbableMode information for prediction units within a picture in an enhancement layer. The lossless decoding section 62b outputs information related to inter prediction to the motion compensation section 80. The lossless decoding section 62b also outputs information related to intra prediction to the intra prediction section 90b.

Note that, as described using FIGS. 8 to 10, for a prediction unit in which the MostProbableMode information of a lower layer is reused, the encoding of the MostProbableMode information of the upper layer may be partially omitted on the encoder side. In this case, the lossless encoding section 16b does not decode the omitted MostProbableMode information.

The intra prediction section 90b uses information related to intra prediction input from the lossless decoding section 62b, reference image data from the frame memory 69, and MostProbableMode information of a lower layer being stored by the inter-layer buffer 7 to conduct an enhancement layer intra prediction process, and generate predicted image data. The intra prediction section 90b then outputs the generated predicted image data to the selector 71. Such an intra prediction process by the intra prediction section 90b will be further described later.

When multiple enhancement layers exist, the second picture decoding section 6b executes such a series of decoding processes for each enhancement layer. The intra prediction section 90b may also use the inter-layer buffer 7 to buffer MostProbableMode information determined for each prediction unit for processing in even higher upper layers.

### [4-2. Exemplary configuration of intra prediction section]

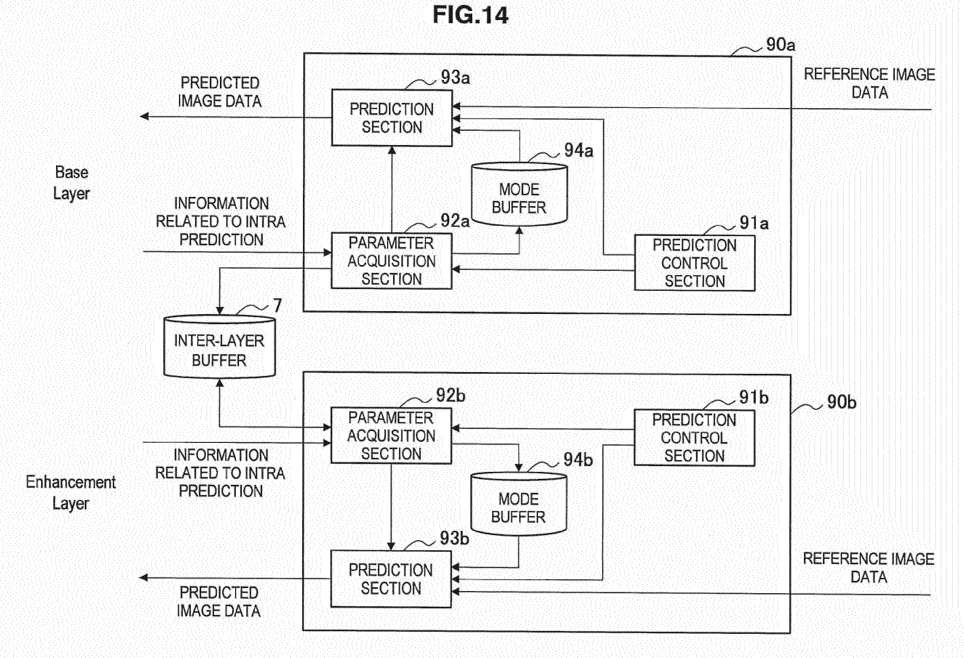

FIG. 14 is a block diagram illustrating an example of a detailed configuration of the intra prediction section 90a illustrated in FIG. 13A and the intra prediction section 90b illustrated in FIG. 13B. Referring to FIG. 14, the intra prediction section 90a includes a prediction control section 91a, a parameter acquisition section 92a, a prediction section 93a, and a mode buffer 94a. The intra prediction section 90b includes a prediction control section 91b, a parameter acquisition section 92b, a prediction section 93b, and a mode buffer 94b.

The prediction control section 91a controls a base layer intra prediction process by the intra prediction section 90a. More specifically, the prediction control section 91a causes the parameter acquisition section 92a to acquire information related to intra prediction decoded by the lossless decoding section 62a. Information acquired by the parameter acquisition section 92a includes prediction mode information and MostProbableMode information for prediction units within a picture in the base layer. The prediction section 93a sets a prediction mode in each prediction unit according to the prediction mode information and the MostProbableMode information acquired by the parameter acquisition section 92a. For example, the prediction section 93a sets a prediction mode indicated by prediction mode information in a prediction unit whose MPM flag indicates "False". In addition, the prediction section 93a sets the same prediction mode as the reference prediction mode of a neighboring block at a position identified by the MPM index in a prediction unit whose MPM flag indicates "True". Subsequently, the prediction section 93a, following the set prediction mode, generates a predicted image for each prediction unit by using reference image data input from the frame memory 69. The mode buffer 94a temporarily stores prediction mode information expressing the prediction mode set for each prediction unit. Predicted image data generated by the prediction section 93a is output to the addition section 65. Also, MostProbableMode information acquired by the parameter acquisition section 92a is output to the inter-layer buffer 7.

The prediction control section 91b controls an enhancement layer intra prediction process by the intra prediction section 90b. More specifically, the prediction control section 91b causes the parameter acquisition section 92b to acquire information related to intra prediction decoded by the lossless decoding section 62b. Information acquired by the parameter acquisition section 92b may include prediction mode information and MostProbableMode information for prediction units within a picture in an enhancement layer. In addition, the prediction control section 91b causes the parameter acquisition section 92b to acquire MostProbableMode information of a lower layer being stored by the inter-layer buffer 7. The prediction section 93b sets a prediction mode in each prediction unit according to the prediction mode information and the MostProbableMode information acquired by the parameter acquisition section 92b. For example, the prediction section 93b sets a prediction mode indicated by prediction mode information in a prediction unit whose MPM flag indicates "False". In addition, the prediction section 93b may set the same prediction mode as the reference prediction mode of a neighboring block at a position identified by an MPM index acquired from the inter-layer buffer 7 in a prediction unit whose MPM flag indicates "True". In the case of decoding a reuse flag indicating "False" for a given prediction unit, the prediction section 93b may set in that prediction unit the same prediction mode as the reference prediction mode of a neighboring block at a position identified by an MPM index separately decoded in an enhancement layer. Subsequently, the prediction section 93b, following the set prediction mode, generates a predicted image for each prediction unit by using reference image data input from the frame memory 69. The mode buffer 94b temporarily stores prediction mode information expressing the prediction mode set for each prediction unit. Predicted image data generated by the prediction section 93b is output to the addition section 65. In addition, the parameter acquisition section 92b may also output the MostProbableMode information to the inter-layer buffer 7 in the case in which an even higher upper layer exists.

### <5. Process flow during decoding according to embodiment>

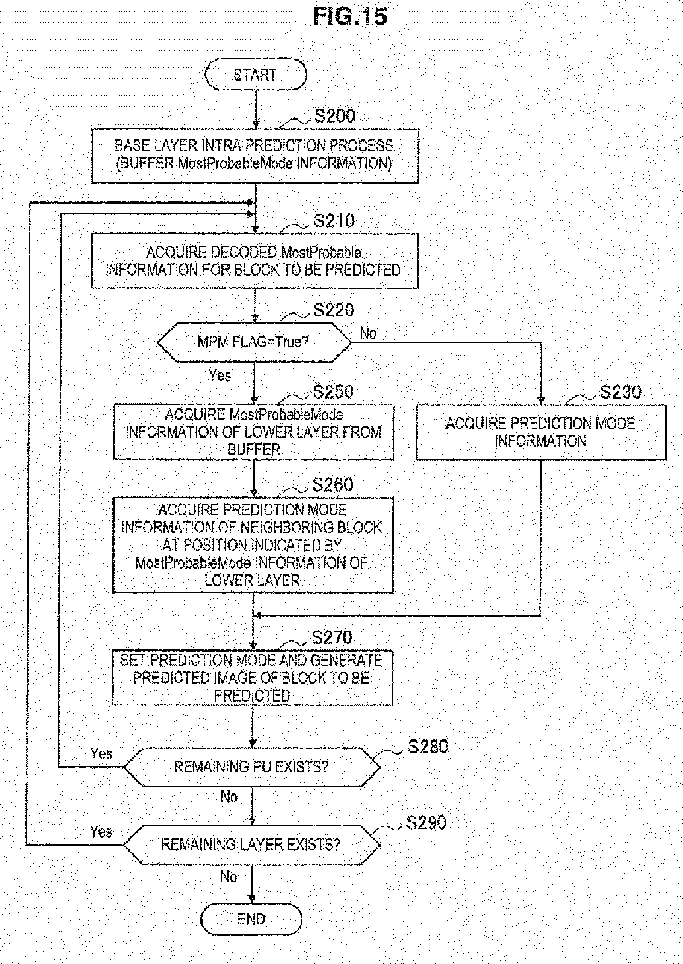

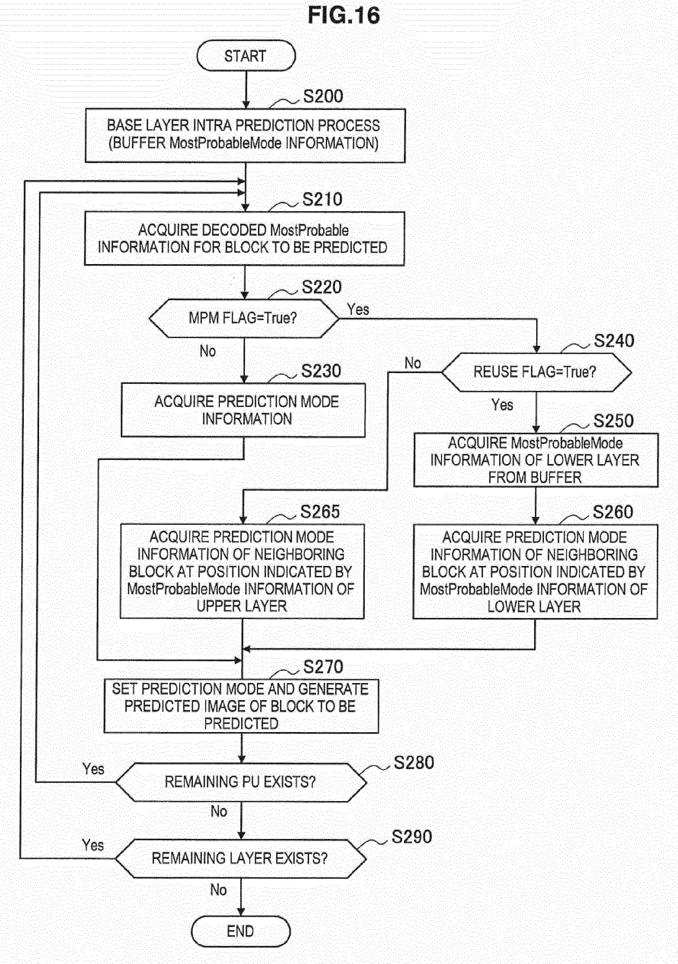

FIGS. 15 and 16 respectively illustrate examples of the flow of an intra prediction process during decoding according to the present embodiment. In the first example illustrated in FIG. 15, a reuse flag as described using FIG. 10 is not introduced. In the second example illustrated in FIG. 16, the reuse flag is introduced.

### (1) First example

Referring to FIG. 15, first, the intra prediction section 90a conducts a base layer intra prediction process (step S200). Consequently, for each prediction unit within a picture in the base layer, predicted image data is generated by using prediction mode information and MostProbableMode information decoded from the encoded stream. The inter-layer buffer 7 buffers MostProbableMode information generated for each prediction unit.

The process from steps S210 to S280 is an enhancement layer intra prediction process. In this process, the processing from steps S210 to S270 is repeated while treating each prediction unit of each enhancement layer as the block to be predicted. Note that in the following description, the "upper layer" is the layer to be predicted, while the "lower layer" is a layer below the layer to be predicted.

First, the parameter acquisition section 92b acquires MostProbableMode information decoded by the lossless decoding section 62b for the block to be predicted in the upper layer (step S210).

Next, the prediction control section 91b determines whether or not the MPM flag of the block to be predicted in the upper layer indicates "True" (step S220). At this point, the process proceeds to step S230 in the case in which the MPM flag does not indicate "True". Conversely, the process proceeds to step S250 in the case in which the MPM flag does indicate "True".

In step S230, the parameter acquisition section 92b acquires prediction mode information decoded by the lossless decoding section 62b for the block to be predicted (step S230). The parameter acquisition section 92b then outputs the acquired prediction mode information to the prediction section 93b.

In step S250, the parameter acquisition section 92b acquires the MostProbableMode information of a lower layer being stored by the inter-layer buffer 7 and corresponding to the block to be predicted (step S250). The parameter acquisition section 92b then outputs the acquired MostProbableMode information to the prediction section 93b. The prediction section 93b acquires from the mode buffer 94b the prediction mode information of a neighboring block at a position indicated by an MPM index included in the MostProbableMode information acquired by the parameter acquisition section 92b (step S260).

Next, the prediction section 93b sets a prediction mode in the block to be predicted according to the acquired prediction mode information, and generates a predicted image of the block to be predicted according to the set prediction mode (step S270).

After that, in the case in which an unprocessed prediction unit remains within the layer to be predicted, the process returns to step S210 (step S280). Conversely, in the case in which no unprocessed prediction units remain, it is additionally determined whether or not a remaining layer (a higher upper layer) exists (step S290). At this point, in the case in which a remaining layer exists, the process from step S210 onwards is repeated while treating the current layer to be predicted as the lower layer, and the next layer as the upper layer. The MostProbableMode information is buffered by the inter-layer buffer 7. In the case in which no remaining layers exist, the intra prediction process in FIG. 15 ends.

### (2) Second example

Referring to FIG. 16, first, the intra prediction section 90a conducts a base layer intra prediction process (step S200). Consequently, for each prediction unit within a picture in the base layer, predicted image data is generated by using prediction mode information and MostProbableMode information decoded from the encoded stream. The inter-layer buffer 7 buffers MostProbableMode information generated for each prediction unit.

The process from steps S210 to S280 is an enhancement layer intra prediction process. In this process, the processing from steps S210 to S270 is repeated while treating each prediction unit of each enhancement layer as the block to be predicted.

First, the parameter acquisition section 92b acquires MostProbableMode information decoded by the lossless decoding section 62b for the block to be predicted in the upper layer (step S210).

Next, the prediction control section 91b determines whether or not the MPM flag of the block to be predicted in the upper layer indicates "True" (step S220). At this point, the process proceeds to step S230 in the case in which the MPM flag does not indicate "True". Conversely, the process proceeds to step S240 in the case in which the MPM flag does indicate "True".

In step S230, the parameter acquisition section 92b acquires prediction mode information decoded by the lossless decoding section 62b for the block to be predicted (step S230). The parameter acquisition section 92b then outputs the acquired prediction mode information to the prediction section 93b.

In step S240, the prediction control section 91b determines whether or not the reuse flag of the block to be predicted indicates "True" (step S240). At this point, the process proceeds to step S250 in the case in which the reuse flag does indicate "True". Conversely, the process proceeds to step S265 in the case in which the reuse flag does not indicate "True".

In step S250, the parameter acquisition section 92b acquires the MostProbableMode information of a lower layer being stored by the inter-layer buffer 7 and corresponding to the block to be predicted (step S250). The parameter acquisition section 92b then outputs the acquired MostProbableMode information to the prediction section 93b. The prediction section 93b acquires from the mode buffer 94b the prediction mode information of a neighboring block at a position indicated by an MPM index included in the MostProbableMode information acquired by the parameter acquisition section 92b (step S260).

In step S265, the prediction section 93b acquires from the mode buffer 94b the prediction mode information of a neighboring block at a position indicated by an MPM index included in the MostProbableMode information for the block to be predicted (step S265).

Next, the prediction section 93b sets a prediction mode in the block to be predicted according to the acquired prediction mode information, and generates a predicted image of the block to be predicted according to the set prediction mode (step S270).

After that, in the case in which an unprocessed prediction unit remains within the layer to be predicted, the process returns to step S210 (step S280). Conversely, in the case in which no unprocessed prediction units remain, it is additionally determined whether or not a remaining layer (a higher upper layer) exists (step S290). At this point, in the case in which a remaining layer exists, the process from step S210 onwards is repeated while treating the current layer to be predicted as the lower layer, and the next layer as the upper layer. The MostProbableMode information is buffered by the inter-layer buffer 7. In the case in which no remaining layers exist, the intra prediction process in FIG. 16 ends.

### <6. Application to various image coding schemes>

The technology according to the present disclosure is not only applicable to scalable coding as discussed above, but also to multiview coding and interlaced coding, for example. In this section, examples of applying the technology according to the present disclosure to multiview coding will be described.

Multiview coding is an image coding scheme for encoding and decoding what are called stereoscopic images. In multiview coding, there are generated two encoded streams that respectively correspond to the right-eye view and the left-eye view of an image to be stereoscopically displayed. One of these two view is selected as the base view, and the other is called the non-base view. When encoding multiview image data, the overall data size of the encoded stream may be compressed by encoding picture in the non-base view on the basis of coding parameters for pictures in the base view.

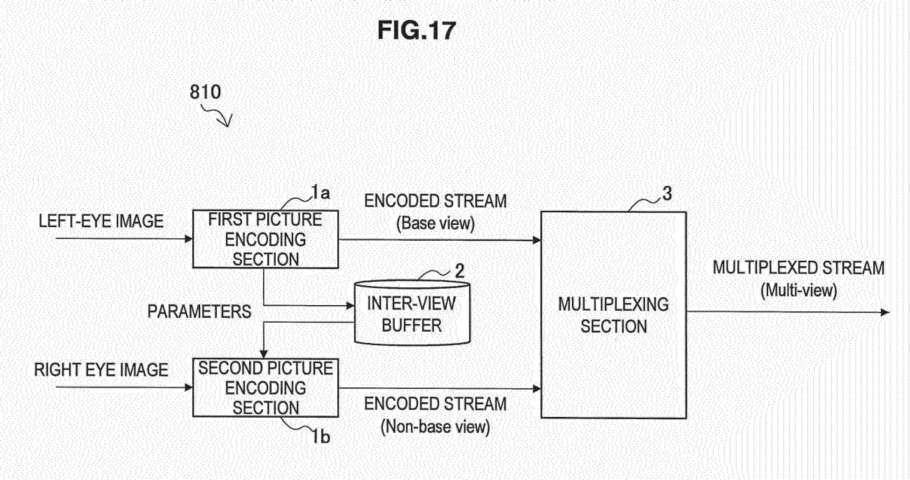

FIG. 17 is an explanatory diagram for explaining an application of the earlier image encoding process to multiview coding. Referring to FIG. 17, a configuration of a multiview encoding device 810 is illustrated as an example. The multiview encoding device 810 is equipped with a first picture encoding section 1a, a second picture encoding section 1b, an inter-view buffer 2, and a multiplexing section 3. Note that as an example herein, the left-eye view is treated as the base view.

The first picture encoding section 1a encodes an image of the left-eye view, and generates an encoded stream of the base view. The second picture encoding section 1b encodes an image of the right-eye view, and generates an encoded stream of the non-base view. The inter-view buffer 2 temporarily stores parameters that are reused between views. The multiplexing section 3 multiplexes the encoded stream of the base view generated by the first picture encoding section 1a with the encoded stream of the non-base view generated by the second picture encoding section 1b, and generates a multiview multiplexed stream.

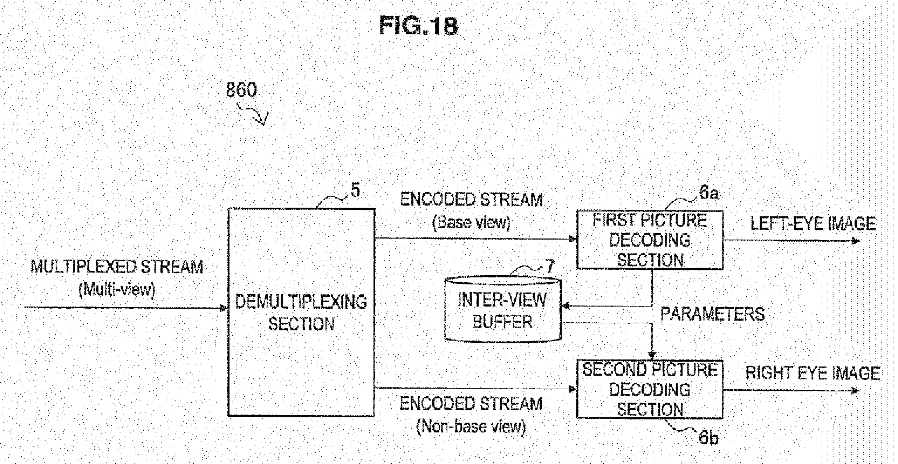

FIG. 18 is an explanatory diagram for explaining an application of the earlier image decoding process to multiview coding. Referring to FIG. 18, a configuration of a multiview decoding device 860 is illustrated as an example. The multiview decoding device 860 is equipped with a demultiplexing section 5, a first picture decoding section 6a, a second picture decoding section 6b, and an inter-view buffer 7.

The demultiplexing section 5 demultiplexes a multiview multiplexed stream into an encoded stream of a base view and an encoded stream of a non-base view. The first picture decoding section 6a decodes the encoded stream of the base view into an image of the left-eye view. The second picture decoding section 6b decodes the encoded stream of the non-base view into an image of the right-eye view. The inter-view buffer 7 temporarily stores parameters that are reused between views.

In the case of applying the technology according to the present disclosure to interlaced coding, the first picture encoding section 1a generates a first encoded stream by encoding one of two fields constituting a single frame, and the first picture decoding section 6a decodes that first encoded stream. Meanwhile, the second picture encoding section 1b generates a second encoded stream by encoding the other field, and the second picture decoding section 6b decodes that second encoded stream.

### <7. Examples of Application>

The image encoding device 10 and the image decoding device 60 according to the embodiment described above may be applied to various electronic appliances such as a transmitter and a receiver for satellite broadcasting, cable broadcasting such as cable TV, distribution on the Internet, distribution to client devices via cellular communication, and the like, a recording device that records images onto a medium such as an optical disc, a magnetic disk, or flash memory, and a playback device that plays back images from such storage media. Four example applications will be described below.

### [7-1. First Example of Application]

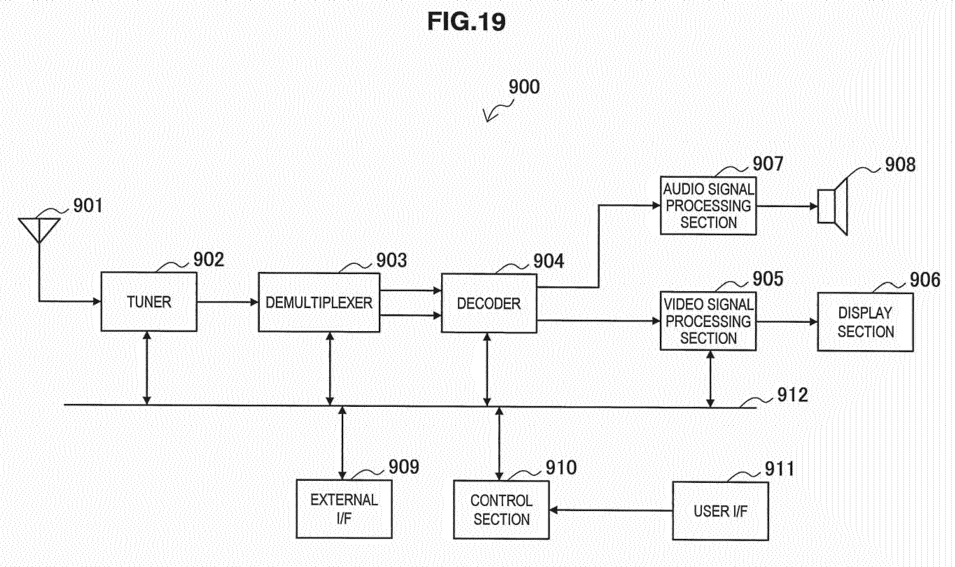

FIG. 19 is a block diagram illustrating an exemplary schematic configuration of a television adopting the embodiment described above. A television 900 includes an antenna 901, a tuner 902, a demultiplexer 903, a decoder 904, a video signal processing section 905, a display section 906, an audio signal processing section 907, a speaker 908, an external interface 909, a control section 910, a user interface 911, and a bus 912.

The tuner 902 extracts a signal of a desired channel from broadcast signals received via the antenna 901, and demodulates the extracted signal. Then, the tuner 902 outputs an encoded bit stream obtained by demodulation to the demultiplexer 903. That is, the tuner 902 serves as transmission means of the television 900 for receiving an encoded stream in which an image is encoded.

The demultiplexer 903 separates a video stream and an audio stream of a program to be viewed from the encoded bit stream, and outputs the separated streams to the decoder 904. Also, the demultiplexer 903 extracts auxiliary data such as an electronic program guide (EPG) from the encoded bit stream, and supplies the extracted data to the control section 910. Additionally, the demultiplexer 903 may perform descrambling in the case where the encoded bit stream is scrambled.

The decoder 904 decodes the video stream and the audio stream input from the demultiplexer 903. Then, the decoder 904 outputs video data generated by the decoding process to the video signal processing section 905. Also, the decoder 904 outputs the audio data generated by the decoding process to the audio signal processing section 907.

The video signal processing section 905 plays back the video data input from the decoder 904, and causes the display section 906 to display the video. The video signal processing section 905 may also cause the display section 906 to display an application screen supplied via a network. Further, the video signal processing section 905 may perform additional processes such as noise removal, for example, on the video data according to settings. Furthermore, the video signal processing section 905 may generate graphical user interface (GUI) images such as menus, buttons, or a cursor, for example, and superimpose the generated images onto an output image.

The display section 906 is driven by a drive signal supplied by the video signal processing section 905, and displays a video or an image on a video screen of a display device (such as a liquid crystal display, a plasma display, or an OLED display, for example).

The audio signal processing section 907 performs playback processes such as D/A conversion and amplification on the audio data input from the decoder 904, and outputs audio from the speaker 908. Also, the audio signal processing section 907 may perform additional processes such as noise removal on the audio data.

The external interface 909 is an interface for connecting the television 900 to an external appliance or a network. For example, a video stream or an audio stream received via the external interface 909 may be decoded by the decoder 904. That is, the external interface 909 also serves as transmission means of the televisions 900 for receiving an encoded stream in which an image is encoded.

The control section 910 includes a processor such as a central processing unit (CPU), and memory such as random access memory (RAM), and read-only memory (ROM). The memory stores a program to be executed by the CPU, program data, EPG data, data acquired via a network, and the like. The program stored in the memory is read and executed by the CPU when activating the television 900, for example. By executing the program, the CPU controls the operation of the television 900 according to an operation signal input from the user interface 911, for example.

The user interface 911 is connected to the control section 910. The user interface 911 includes buttons and switches used by a user to operate the television 900, and a remote control signal receiver, for example. The user interface 911 detects an operation by the user via these structural elements, generates an operation signal, and outputs the generated operation signal to the control section 910.

The bus 912 interconnects the tuner 902, the demultiplexer 903, the decoder 904, the video signal processing section 905, the audio signal processing section 907, the external interface 909, and the control section 910.

In a television 900 configured in this way, the decoder 904 includes the functions of an image decoding device 60 according to the foregoing embodiments. Consequently, it is possible to, in scalable decoding of an image in the television device 900, decode encoded streams of multiple encoded pictures more efficiently.

### [7-2. Second Example of Application]

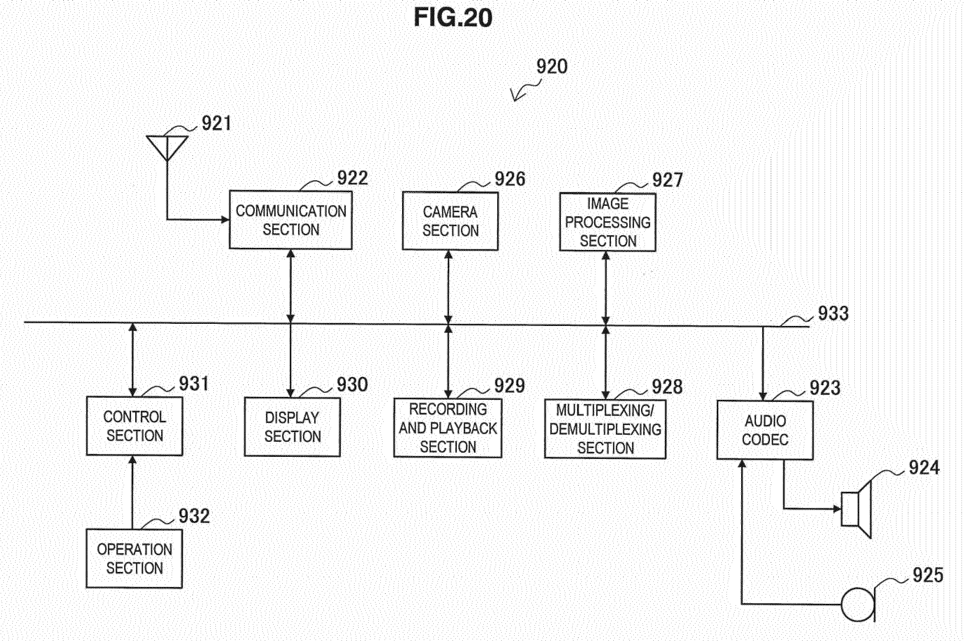

FIG. 20 is a block diagram illustrating an exemplary schematic configuration of a mobile phone adopting the embodiment described above. A mobile phone 920 includes an antenna 921, a communication section 922, an audio codec 923, a speaker 924, a microphone 925, a camera section 926, an image processing section 927, a multiplexing/demultiplexing (mux/demux) section 928, a recording and playback section 929, a display section 930, a control section 931, an operable section 932, and a bus 933.

The antenna 921 is connected to the communication section 922. The speaker 924 and the microphone 925 are connected to the audio codec 923. The operable section 932 is connected to the control section 931. The bus 933 interconnects the communication section 922, the audio codec 923, the camera section 926, the image processing section 927, the mux/demux section 928, the recording and playback section 929, the display 930, and the control section 931.

The mobile phone 920 performs operations such as transmitting and receiving audio signals, transmitting and receiving emails or image data, taking images, and recording data in various operating modes including an audio communication mode, a data communication mode, an imaging mode, and a videophone mode.

In the audio communication mode, an analog audio signal generated by the microphone 925 is supplied to the audio codec 923. The audio codec 923 converts the analog audio signal into audio data, and A/D converts and compresses the converted audio data. Then, the audio codec 923 outputs the compressed audio data to the communication section 922. The communication section 922 encodes and modulates the audio data, and generates a transmit signal. Then, the communication section 922 transmits the generated transmit signal to a base station

(not illustrated) via the antenna 921. Also, the communication section 922 amplifies a wireless signal received via the antenna 921 and converts the frequency of the wireless signal, and acquires a received signal. Then, the communication section 922 demodulates and decodes the received signal and generates audio data, and outputs the generated audio data to the audio codec 923. The audio codec 923 decompresses and D/A converts the audio data, and generates an analog audio signal. Then, the audio codec 923 supplies the generated audio signal to the speaker 924 and causes audio to be output.

Also, in the data communication mode, the control section 931 generates text data that makes up an email, according to operations by a user via the operable section 932, for example. Moreover, the control section 931 causes the text to be displayed on the display section 930. Furthermore, the control section 931 generates email data according to transmit instructions from the user via the operable section 932, and outputs the generated email data to the communication section 922. The communication section 922 encodes and modulates the email data, and generates a transmit signal. Then, the communication section 922 transmits the generated transmit signal to a base station (not illustrated) via the antenna 921. Also, the communication section 922 amplifies a wireless signal received via the antenna 921 and converts the frequency of the wireless signal, and acquires a received signal. Then, the communication section 922 demodulates and decodes the received signal, restores the email data, and outputs the restored email data to the control section 931. The control section 931 causes the display section 930 to display the contents of the email, and also causes the email data to be stored in the storage medium of the recording and playback section 929.

The recording and playback section 929 includes an arbitrary readable and writable storage medium. For example, the storage medium may be a built-in storage medium such as RAM, or flash memory, or an externally mounted storage medium such as a hard disk, a magnetic disk, a magneto-optical disc, an optical disc, USB memory, or a memory card.

Furthermore, in the imaging mode, the camera section 926 takes an image of a subject, generates image data, and outputs the generated image data to the image processing section 927, for example. The image processing section 927 encodes the image data input from the camera section 926, and causes the encoded stream to be stored in the storage medium of the recording and playback section 929.

Furthermore, in the videophone mode, the mux/demux section 928 multiplexes a video stream encoded by the image processing section 927 and an audio stream input from the audio codec 923, and outputs the multiplexed stream to the communication section 922, for example. The communication section 922 encodes and modulates the stream, and generates a transmit signal. Then, the communication section 922 transmits the generated transmit signal to a base station (not illustrated) via the antenna 921. Also, the communication section 922 amplifies a wireless signal received via the antenna 921 and converts the frequency of the wireless signal, and acquires a received signal. The transmit signal and received signal may include an encoded bit stream. Then, the communication section 922 demodulates and decodes the received signal, restores the stream, and outputs the restored stream to the mux/demux section 928. The mux/demux section 928 separates a video stream and an audio stream from the input stream, and outputs the video stream to the image processing section 927 and the audio stream to the audio codec 923. The image processing section 927 decodes the video stream, and generates video data. The video data is supplied to the display section 930, and a series of images is displayed by the display section 930. The audio codec 923 decompresses and D/A converts the audio stream, and generates an analog audio signal. Then, the audio codec 923 supplies the generated audio signal to the speaker 924 and causes audio to be output.

In a mobile phone 920 configured in this way, the image processing section 927 includes the functions of the image encoding device 10 and the image decoding device 60 according to the foregoing embodiments. Accordingly, it is possible to, in scalable encoding and decoding of an image in the portable phone set 920, generate encoded streams of multiple pictures and decode the generated encoded streams more efficiently.

### [7-3. Third Example of Application]

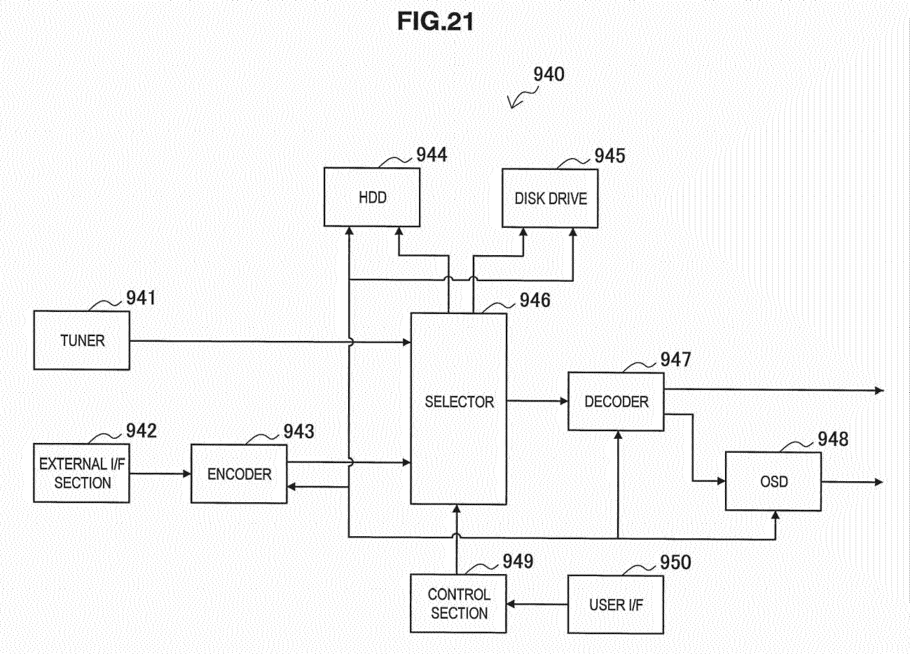

FIG. 21 is a block diagram illustrating an exemplary schematic configuration of a recording and playback device adopting the embodiment described above. A recording and playback device 940 encodes, and records onto a recording medium, the audio data and video data of a received broadcast program, for example. The recording and playback device 940 may also encode, and record onto the recording medium, audio data and video data acquired from another device, for example. Furthermore, the recording and playback device 940 plays back data recorded onto the recording medium via a monitor and speaker according to instructions from a user, for example. At such times, the recording and playback device 940 decodes the audio data and the video data.

The recording and playback device 940 includes a tuner 941, an external interface 942, an encoder 943, a hard disk drive (HDD) 944, a disc drive 945, a selector 946, a decoder 947, an on-screen display (OSD) 948, a control section 949, and a user interface 950.

The tuner 941 extracts a signal of a desired channel from broadcast signals received via an antenna (not illustrated), and demodulates the extracted signal. Then, the tuner 941 outputs an encoded bit stream obtained by demodulation to the selector 946. That is, the tuner 941 serves as transmission means of the recording and playback device 940.

The external interface 942 is an interface for connecting the recording and playback device 940 to an external appliance or a network. For example, the external interface 942 may be an IEEE 1394 interface, a network interface, a USB interface, a flash memory interface, or the like. For example, video data and audio data received by the external interface 942 are input into the encoder 943. That is, the external interface 942 serves as transmission means of the recording and playback device 940.

In the case where the video data and the audio data input from the external interface 942 are not encoded, the encoder 943 encodes the video data and the audio data. Then, the encoder 943 outputs the encoded bit stream to the selector 946.

The HDD 944 records onto an internal hard disk an encoded bit stream, which is compressed content data such as video or audio, various programs, and other data. Also, the HDD 944 reads such data from the hard disk when playing back video and audio.

The disc drive 945 records or reads data with respect to an inserted recording medium. The recording medium inserted into the disc drive 945 may be a DVD disc (such as a DVD-Video, DVD-RAM, DVD-R, DVD-RW, DVD+, or DVD+RW disc), a Blu-ray (registered trademark) disc, or the like, for example.

When recording video and audio, the selector 946 selects an encoded bit stream input from the tuner 941 or the encoder 943, and outputs the selected encoded bit stream to the HDD 944 or the disc drive 945. Also, when playing back video and audio, the selector 946 outputs an encoded bit stream input from the HDD 944 or the disc drive 945 to the decoder 947.

The decoder 947 decodes the encoded bit stream, and generates video data and audio data. Then, the decoder 947 outputs the generated video data to the OSD 948. Also, the decoder 904 outputs the generated audio data to an external speaker.

The OSD 948 plays back the video data input from the decoder 947, and displays video. Also, the OSD 948 may superimpose GUI images, such as menus, buttons, or a cursor, for example, onto displayed video.

The control section 949 includes a processor such as a CPU, and memory such as RAM or ROM. The memory stores a program to be executed by the CPU, program data, and the like. A program stored in the memory is read and executed by the CPU when activating the recording and playback device 940, for example. By executing the program, the CPU controls the operation of the recording and playback device 940 according to an operation signal input from the user interface 950, for example.

The user interface 950 is connected to the control section 949. The user interface 950 includes buttons and switches used by a user to operate the recording and playback device 940, and a remote control signal receiver, for example. The user interface 950 detects an operation by the user via these structural elements, generates an operation signal, and outputs the generated operation signal to the control section 949.

In a recording and playback device 940 configured in this way, the encoder 943 includes the functions of the image encoding device 10 according to the foregoing embodiments. In addition, the decoder 947 includes the functions of the image decoding device 60 according to the foregoing embodiments. Accordingly, it is possible to, in scalable encoding and decoding of an image in the recording/reproducing device 940, generate encoded streams of multiple pictures and decode the generated encoded streams more efficiently.

### [7-4. Fourth Example of Application]

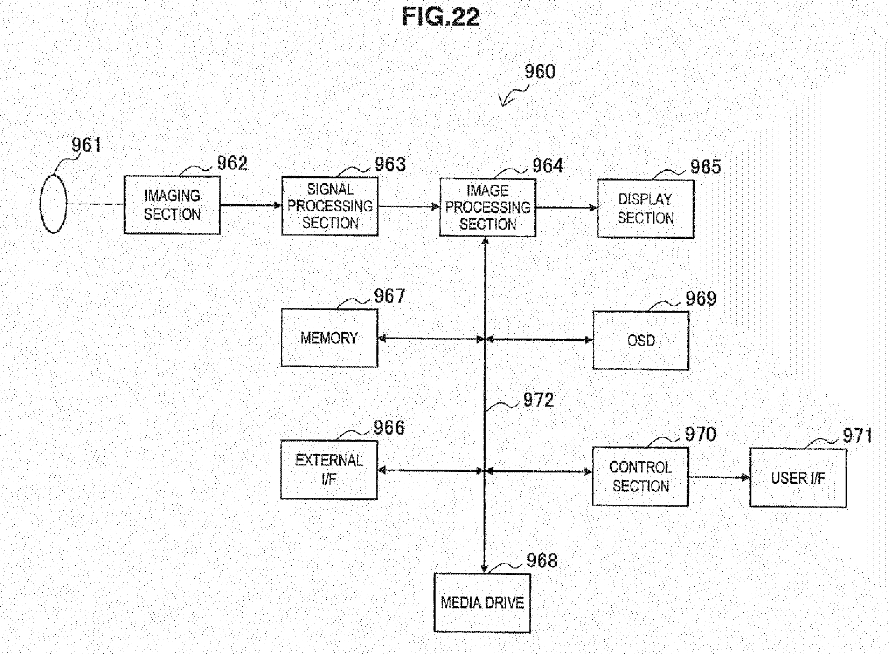

FIG. 22 is a block diagram showing an example of a schematic configuration of an imaging device adopting the embodiment described above. An imaging device 960 takes an image of a subject, generates an image, encodes the image data, and records the image data onto a recording medium.

The imaging device 960 includes an optical block 961, an imaging section 962, a signal processing section 963, an image processing section 964, a display section 965, an external interface 966, memory 967, a media drive 968, an OSD 969, a control section 970, a user interface 971, and a bus 972.

The optical block 961 is connected to the imaging section 962. The imaging section 962 is connected to the signal processing section 963. The display section 965 is connected to the image processing section 964. The user interface 971 is connected to the control section 970. The bus 972 interconnects the image processing section 964, the external interface 966, the memory 967, the media drive 968, the OSD 969, and the control section 970.

The optical block 961 includes a focus lens, an aperture stop mechanism, and the like. The optical block 961 forms an optical image of a subject on the imaging surface of the imaging section 962. The imaging section 962 includes an image sensor such as a CCD or CMOS sensor, and photoelectrically converts the optical image formed on the imaging surface into an image signal which is an electrical signal. Then, the imaging section 962 outputs the image signal to the signal processing section 963.

The signal processing section 963 performs various camera signal processes such as knee correction, gamma correction, and color correction on the image signal input from the imaging section 962. The signal processing section 963 outputs the processed image data to the image processing section 964.

The image processing section 964 encodes the image data input from the signal processing section 963, and generates encoded data. Then, the image processing section 964 outputs the encoded data thus generated to the external interface 966 or the media drive 968. Also, the image processing section 964 decodes encoded data input from the external interface 966 or the media drive 968, and generates image data. Then, the image processing section 964 outputs the generated image data to the display section 965. Also, the image processing section 964 may output the image data input from the signal processing section 963 to the display section 965, and cause the image to be displayed. Furthermore, the image processing section 964 may superimpose display data acquired from the OSD 969 onto an image to be output to the display section 965.

The OSD 969 generates GUI images such as menus, buttons, or a cursor, for example, and outputs the generated images to the image processing section 964.

The external interface 966 is configured as an USB input/output terminal, for example. The external interface 966 connects the imaging device 960 to a printer when printing an image, for example. Also, a drive is connected to the external interface 966 as necessary. A removable medium such as a magnetic disk or an optical disc, for example, is inserted into the drive, and a program read from the removable medium may be installed in the imaging device 960. Furthermore, the external interface 966 may be configured as a network interface to be connected to a network such as a LAN or the Internet. That is, the external interface 966 serves as transmission means of the image capturing device 960.

A recording medium to be inserted into the media drive 968 may be an arbitrary readable and writable removable medium, such as a magnetic disk, a magneto-optical disc, an optical disc, or semiconductor memory, for example. Also, a recording medium may be permanently installed in the media drive 968 to constitute a non-portable storage section such as an internal hard disk drive or a solid-state drive (SSD), for example.

The control section 970 includes a processor such as a CPU, and memory such as RAM or ROM. The memory stores a program to be executed by the CPU, program data, and the like. A program stored in the memory is read and executed by the CPU when activating the imaging device 960, for example. By executing the program, the CPU controls the operation of the imaging device 960 according to an operation signal input from the user interface 971, for example.

The user interface 971 is connected to the control section 970. The user interface 971 includes buttons, switches and the like used by a user to operate the imaging device 960, for example. The user interface 971 detects an operation by the user via these structural elements, generates an operation signal, and outputs the generated operation signal to the control section 970.

In an imaging device 960 configured in this way, the image processing section 964 includes the functions of the image encoding device 10 and the image decoding device 60 according to the foregoing embodiments. Accordingly, it is possible to, in scalable encoding and decoding of an image in the imaging device 960, generate encoded streams of multiple pictures and decode the generated encoded streams more efficiently.

### <8. Conclusion>

The foregoing uses FIGS. 1 to 22 to describe an image encoding device 10 and an image decoding device 60 according to an embodiment. According to the present embodiment, in an image coding scheme in which multiple streams are encoded, when executing intra prediction for a prediction unit within a given picture, it becomes possible to reuse MostProbableMode information used for a corresponding prediction unit with another picture associated with a common scene. Consequently, it becomes possible to encode parameters for intra prediction more efficiently in an image coding scheme in which multiple streams are encoded.

In addition, according to the present embodiment, the MostProbableMode information to be reused may be index information that identifies the position of a neighboring block having a reference prediction mode to be treated as the MostProbableMode. In the case in which a common scene (not necessarily the exact same scene) is depicted in multiple pictures, the spatial correlations of images resemble each other among those pictures. Consequently, the optimal prediction directions of intra prediction likewise tend to resemble each other among those pictures. Accordingly, if index information determined depending on such an optimal prediction direction is reused among pictures, the bit rate of the MostProbableMode information may be effectively reduced.

Also, according to the present embodiment, the above index information may be information that identifies one of left and up neighboring block candidates, for example. Such a configuration is ideally suited to an encoder and decoder that adopt the technique proposed by the above Non-Patent Literature 2. Additionally, the above index information may also be information that identifies one from among three or more neighboring block candidates. In the case in which three or more neighboring block candidates exist, the bit length of the index information that specifies the position of a neighboring becomes larger. Consequently, in this case, the ratio of MostProbableMode information that may be reduced by reusing index information may also increase.

In addition, according to the present embodiment, MostProbableMode information may also be reused among pictures only in the case in which an additional encoding parameter indicates that the MostProbableMode information is to be reused. According to such a configuration, it becomes possible to overwrite the index information used for a first prediction unit within a first picture in a corresponding second prediction unit within a second picture, and utilize a separate MostProbableMode for the second prediction unit. As a result, switching between whether or not to reuse MostProbableMode information may be more flexibly conducted.

Note that this specification primarily describes an example in which information related to intra prediction and information related to inter prediction is multiplexed into the header of an encoded stream and transmitted from the encoding side to the decoding side. However, the technique of transmitting such information is not limited to such an example. For example, such information may also be transmitted or recorded as separate data associated with an encoded bit stream without being multiplexed into the encoded bit stream. Herein, the term "associated" means that images included in the bit stream (also encompassing partial images such as slices or blocks) and information corresponding to those images can be linked at the time of decoding. In other words, information may also be transmitted on a separate transmission channel from an image (or bit stream). Also, the information may be recorded to a separate recording medium (or a separate recording area on the same recording medium) from the image (or bit stream). Furthermore, information and images (or bit streams) may be associated with each other in arbitrary units such as multiple frames, single frames, or portions within frames, for example.

The foregoing thus describes preferred embodiments of the present disclosure in detail and with reference to the attached drawings. However, the technical scope of the present disclosure is not limited to such examples. It is clear to persons ordinarily skilled in the technical field of the present disclosure that various modifications or alterations may occur insofar as they are within the scope of the technical ideas stated in the claims, and it is to be understood that such modifications or alterations obviously belong to the technical scope of the present disclosure.

Additionally, the present technology may also be configured as below.
(1) An image processing device including:
   a decoding section that, from an encoded stream of a first picture among two or more pictures associated with a common scene, decodes MostProbableMode information for a first prediction unit within the first picture;
   a first prediction section that conducts intra prediction on the first prediction unit using the MostProbableMode information decoded by the decoding section; and
   a second prediction section that conducts intra prediction using the MostProbableMode information used by the first prediction section on a second prediction unit corresponding to the first prediction unit within a second picture among the two or more pictures.
(2) The image processing device according to (1), wherein
   the MostProbableMode information includes index information that identifies a position of a neighboring block having a reference prediction mode to be treated as a MostProbableMode.
(3) The image processing device according to (2), wherein
   the index information is information that identifies one of left and up neighboring block candidates.
(4) The image processing device according to (2), wherein
   the index information is information that identifies one from among three or more neighboring block candidates.
(5) The image processing device according to any one of (1) to (4), wherein
   the second prediction section conducts intra prediction using the MostProbableMode information in the case in which a parameter acquired from an encoded stream of the second picture indicates that the MostProbableMode information is to be reused.
(6) The image processing device according to any one of (1) to (5), wherein
   the first picture corresponds to a first layer of an scalably encoded image, and
   the second picture corresponds to a second layer that is higher than the first layer.
(7) The image processing device according to (6), wherein
   the first layer and the second layer have mutually different spatial resolutions, noise ratios, or bit depths.
(8) The image processing device according to any one of (1) to (5), wherein
   the first picture corresponds to one of a right-eye view and a left-eye view of an image to be stereoscopically displayed, and
   the second picture corresponds to the other of the right-eye view and the left-eye view of the image.
(9) The image processing device according to any one of (1) to (5), wherein
   the first picture corresponds to a first field of an image encoded with interlacing, and
   the second picture corresponds to a second field of the image.
(10) An image processing method including:
   decoding, from an encoded stream of a first picture among two or more pictures associated with a common scene, MostProbableMode information for a first prediction unit within the first picture;
   conducting intra prediction on the first prediction unit using the decoded MostProbableMode information; and
   conducting intra prediction using the MostProbableMode information on a second prediction unit corresponding to the first prediction unit within a second picture among the two or more pictures.
(11) An image processing device including:
   a first determination section that determines whether a MostProbableMode is enabled for a first prediction unit within a first picture among two or more pictures associated with a common scene;
   a first encoding section that, according to a determination result by the first determination section, encodes MostProbableMode information for the first prediction unit into an encoded stream of the first picture; and
   a second determination section that determines whether a reference prediction mode specified using the MostProbableMode information is enabled as a MostProbableMode for a second prediction unit corresponding to the first prediction unit within a second picture among the two or more pictures.
(12) The image processing device according to (11), wherein
   the MostProbableMode information includes index information that identifies a position of a neighboring block having the reference prediction mode.
(13) The image processing device according to (12), wherein
   the index information is information that identifies one of left and up neighboring block candidates.
(14) The image processing device according to (12), wherein
   the index information is information that identifies one from among three or more neighboring block candidates.
(15) The image processing device according to any one of (12) to (14), further including:
   a second encoding section that, in the case of reusing the MostProbableMode information for the second prediction unit, encodes a parameter indicating that the MostProbableMode information is to be reused into an encoded stream of the second picture;
   wherein, in the case in which the parameter does not indicate that the MostProbableMode information is to be reused, the second encoding section encodes separate index information for the second prediction unit into an encoded stream of the second picture.
(16) The image processing device according to any one of (11) to (15), wherein
   the first picture corresponds to a first layer of an scalably encoded image, and
   the second picture corresponds to a second layer that is higher than the first layer.
(17) The image processing device according to (16), wherein
   the first layer and the second layer have mutually different spatial resolutions, noise ratios, or bit depths.
(18) The image processing device according to any one of (11) to (15), wherein
   the first picture corresponds to one of a right-eye view and a left-eye view of an image to be stereoscopically displayed, and
   the second picture corresponds to the other of the right-eye view and the left-eye view of the image.
(19) The image processing device according to any one of (11) to (15), wherein
   the first picture corresponds to a first field of an image encoded with interlacing, and
   the second picture corresponds to a second field of the image.
(20) An image processing method including:
   determining whether a MostProbableMode is enabled for a first prediction unit within a first picture among two or more pictures associated with a common scene;
   encoding, according to a result of the determination, MostProbableMode information for the first prediction unit into an encoded stream of the first picture; and
   determining whether a reference prediction mode specified using the MostProbableMode information is enabled as a MostProbableMode for a second prediction unit corresponding to the first prediction unit within a second picture among the two or more pictures.

### Reference Signs List

- 10, 810: image encoding device (image processing device)
- 16a: first encoding section
- 16b: second encoding section
- 43a: first determination section
- 43b: second determination section
- 60, 860: image decoding device (image processing device)
- 62a: decoding section
- 93a: first prediction section
- 93b: second prediction section

## Claims

1. An image processing device comprising:
a decoding section that, from an encoded stream of a first picture among two or more pictures associated with a common scene, decodes MostProbableMode information for a first prediction unit within the first picture;
a first prediction section that conducts intra prediction on the first prediction unit using the MostProbableMode information decoded by the decoding section; and
a second prediction section that conducts intra prediction using the MostProbableMode information used by the first prediction section on a second prediction unit corresponding to the first prediction unit within a second picture among the two or more pictures.

2. The image processing device according to claim 1, wherein
the MostProbableMode information includes index information that identifies a position of a neighboring block having a reference prediction mode to be treated as a MostProbableMode.

3. The image processing device according to claim 2, wherein
the index information is information that identifies one of left and up neighboring block candidates.

4. The image processing device according to claim 2, wherein
the index information is information that identifies one from among three or more neighboring block candidates.

5. The image processing device according to claim 1, wherein
the second prediction section conducts intra prediction using the MostProbableMode information in the case in which a parameter acquired from an encoded stream of the second picture indicates that the MostProbableMode information is to be reused.

6. The image processing device according to claim 1, wherein
the first picture corresponds to a first layer of an scalably encoded image, and
the second picture corresponds to a second layer that is higher than the first layer.

7. The image processing device according to claim 6, wherein
the first layer and the second layer have mutually different spatial resolutions, noise ratios, or bit depths.

8. The image processing device according to claim 1, wherein
the first picture corresponds to one of a right-eye view and a left-eye view of an image to be stereoscopically displayed, and
the second picture corresponds to the other of the right-eye view and the left-eye view of the image.

9. The image processing device according to claim 1, wherein
the first picture corresponds to a first field of an image encoded with interlacing, and
the second picture corresponds to a second field of the image.

10. An image processing method comprising:
decoding, from an encoded stream of a first picture among two or more pictures associated with a common scene, MostProbableMode information for a first prediction unit within the first picture;
conducting intra prediction on the first prediction unit using the decoded MostProbableMode information; and
conducting intra prediction using the MostProbableMode information on a second prediction unit corresponding to the first prediction unit within a second picture among the two or more pictures.

11. An image processing device comprising:
a first determination section that determines whether a MostProbableMode is enabled for a first prediction unit within a first picture among two or more pictures associated with a common scene;
a first encoding section that, according to a determination result by the first determination section, encodes MostProbableMode information for the first prediction unit into an encoded stream of the first picture; and
a second determination section that determines whether a reference prediction mode specified using the MostProbableMode information is enabled as a MostProbableMode for a second prediction unit corresponding to the first prediction unit within a second picture among the two or more pictures.

12. The image processing device according to claim 11, wherein
the MostProbableMode information includes index information that identifies a position of a neighboring block having the reference prediction mode.

13. The image processing device according to claim 12, wherein
the index information is information that identifies one of left and up neighboring block candidates.

14. The image processing device according to claim 12, wherein
the index information is information that identifies one from among three or more neighboring block candidates.

15. The image processing device according to claim 12, further comprising:
a second encoding section that, in the case of reusing the MostProbableMode information for the second prediction unit, encodes a parameter indicating that the MostProbableMode information is to be reused into an encoded stream of the second picture;
wherein, in the case in which the parameter does not indicate that the MostProbableMode information is to be reused, the second encoding section encodes separate index information for the second prediction unit into an encoded stream of the second picture.

16. The image processing device according to claim 11, wherein
the first picture corresponds to a first layer of an scalably encoded image, and
the second picture corresponds to a second layer that is higher than the first layer.

17. The image processing device according to claim 16, wherein
the first layer and the second layer have mutually different spatial resolutions, noise ratios, or bit depths.

18. The image processing device according to claim 11, wherein
the first picture corresponds to one of a right-eye view and a left-eye view of an image to be stereoscopically displayed, and
the second picture corresponds to the other of the right-eye view and the left-eye view of the image.

19. The image processing device according to claim 11, wherein
the first picture corresponds to a first field of an image encoded with interlacing, and
the second picture corresponds to a second field of the image.

20. An image processing method comprising:
determining whether a MostProbableMode is enabled for a first prediction unit within a first picture among two or more pictures associated with a common scene;
encoding, according to a result of the determination, MostProbableMode information for the first prediction unit into an encoded stream of the first picture; and
determining whether a reference prediction mode specified using the MostProbableMode information is enabled as a MostProbableMode for a second prediction unit corresponding to the first prediction unit within a second picture among the two or more pictures.
